# EUROPEAN PATENT APPLICATION

(11) **EP 2 871 872 A1**
(43) Date of publication of application: **13.05.2015**
(21) Application number: 14188191.2
(22) Date of filing: 08.10.2014
(51) Int. Cl.: H04W 4/20, G06F 3/048, G06K 9/00, H04M 1/725

(54) **Mobile terminal and control method thereof**

(30) Priority: 12.11.2013 KR 20130137128; 12.11.2013 KR 20130137129
(71) Applicant: LG ELECTRONICS INC., Yeongdeungpo-Gu Seoul 150-721 (KR)
(72) Inventor: Baek, Songyi, 137-893 SEOUL (KR); Kim, Hoihan, 137-893 SEOUL (KR); Yang, Yoonseok, 137-893 SEOUL (KR); Lee, Donghoon, 137-893 SEOUL (KR); Park, Kwangsoo, 137-893 SEOUL (KR); Kim, Jiyeon, 137-893 SEOUL (KR); Kang, Heekyung, 137-893 SEOUL (KR); Moon, Kyungjin, 137-893 SEOUL (KR)
(74) Representative: Cabinet Plasseraud

(57) **Abstract**

A mobile terminal including a wireless communication unit configured to provide wireless communication; a display unit; and a controller configured to receive a fingerprint input on the display unit matching at least one of a first user's fingerprint and a second user's fingerprint, said first user being a main user of the mobile terminal and being different than the second user, and control at least one of the mobile terminal of the first user and a terminal of the second user based on the received fingerprint input.

## Description

### BACKGROUND OF THE INVENTION

### 1. Field of the Invention

The present invention relates to a mobile terminal, and more particularly, to a mobile terminal capable of fingerprint recognition and a control method thereof.

### 2. Description of the Related Art

Terminals can be classified into two types, such as a mobile or portable terminal and a stationary terminal based on its mobility. Furthermore, the mobile terminal can be further classified into two types, such as a handheld terminal and a vehicle mounted terminal based on whether or not it can be directly carried by a user.

As it becomes multifunctional, for example, such a terminal is allowed to capture still images or moving images, play music or video files, play games, receive broadcast and the like, so as to be implemented as an integrated multimedia player. Moreover, the improvement of structural or software elements of the terminal may be taken into consideration to support and enhance the functions of the terminal.

Owing to the enhancement, a mobile terminal may recognize a user's fingerprint entered thereto. However, only a limited feature such as implementing a lock release using a fingerprint input for the owner of the terminal has been mostly performed.

### SUMMARY OF THE INVENTION

Accordingly, one object of the present invention is to provide a mobile terminal and control method thereof capable of receiving fingerprints for the owner of the terminal as well as another user with which his or her fingerprint is registered to implement various functions, thereby enhancing the user's convenience.

To achieve these and other advantages and in accordance with the purpose of the present invention, as embodied and broadly described herein, the present invention provides in one aspect a mobile terminal including a wireless communication unit configured to provide wireless communication; a display unit; and a controller configured to: receive a fingerprint input on the display unit matching at least one of a first user's fingerprint and a second user's fingerprint, said first user being a main user of the mobile terminal and being different than the second user, and control at least one of the mobile terminal of the first user and a terminal of the second user based on the received fingerprint input. The present invention also provides a corresponding method of controlling a mobile terminal.

According to an embodiment, wherein the controller is further configured to: display an image on the display unit, receive the second user's fingerprint on the displayed image, and control the wireless communication unit to transmit the displayed image to the terminal of the second user.

According to an embodiment, wherein the controller is further configured to: display a photo album on the display unit, receive both the first user's fingerprint and the second user's fingerprint on the photo album, and display content contained in the photo album of the mobile terminal and content contained in a photo album of the terminal of the second user on divided first and second screens of the display unit.

According to an embodiment, wherein the controller is further configured to: receive a drag input from the first screen to the second screen, display content from the first screen also on the second screen according to the received drag input, and transmit the content from the first screen to the terminal of the second user.

According to an embodiment, wherein the controller is further configured to: determine that the fingerprint input is a non-fingerprint-registered user that does not match either the first user's fingerprint or the second user's fingerprint in a camera capture mode, and restrict the non-fingerprint-register user to only being able to use the camera capture mode.

According to an embodiment, wherein the controller is further configured to: receive the second user's fingerprint on the display unit in a camera capture mode, and display on the display unit at least one of content captured by the second user and content including an image of the second user.

According to an embodiment, wherein the controller is further configured to control the wireless communication unit to transmit said at least one of the content captured by the second user and the content including the image of the second user to the terminal of the second user.

According to an embodiment, wherein the controller is further configured to: receive a call from another terminal, determine that the fingerprint input is a non-fingerprint-registered user that does not match either the first user's fingerprint or the second user's fingerprint, and display a message on the display unit indicating the non-fingerprint-register user.

According to an embodiment, wherein the controller is further configured to: receive the second user's fingerprint and corresponding security data transmitted from the terminal of the second user.

According to an embodiment, wherein the controller is further configured to: receive the second user's fingerprint and corresponding payment data, and authorize or reject online payment for a product to be purchased by the second user.

According to an embodiment, wherein the controller is further configured to: communicate with the terminal of the second user, and request and store the second user's fingerprint from the terminal of the second user.

To achieve these and other advantages and in accordance with the purpose of the present invention, as embodied and broadly described herein, the present invention provides in one aspect a method of controlling a mobile terminal, the method comprising: receiving, via a controller of the mobile terminal, a fingerprint input on a display unit matching at least one of a first user's fingerprint and a second user's fingerprint, said first user being a main user of the mobile terminal and being different than the second user; and controlling, via the controller, at least one of the mobile terminal of the first user and a terminal of the second user based on the received fingerprint input.

According to an embodiment, the method further comprising: displaying an image on the display unit, receiving the second user's fingerprint on the displayed image, and controlling the wireless communication unit to transmit the displayed image to the terminal of the second user.

According to an embodiment, the method further comprising: displaying a photo album on the display unit, receiving both the first user's fingerprint and the second user's fingerprint on the photo album and displaying content contained in the photo album of the mobile terminal and content contained in a photo album of the terminal of the second user on divided first and second screens of the display unit.

According to an embodiment, the method further comprising: receiving a drag input from the first screen to the second screen, displaying content from the first screen also on the second screen according to the received drag input, and transmitting the content from the first screen to the terminal of the second user.

According to an embodiment, the method further comprising: determining that the fingerprint input is a non-fingerprint-registered user that does not match either the first user's fingerprint or the second user's fingerprint in a camera capture mode, and restricting the non-fingerprint-register user to only being able to use the camera capture mode.

According to an embodiment, the method further comprising: receiving the second user's fingerprint on the display unit in a camera capture mode, and displaying on the display unit at least one of content captured by the second user and content including an image of the second user.

According to an embodiment, the method further comprising: controlling the wireless communication unit to transmit said at least one of the content captured by the second user and the content including the image of the second user to the terminal of the second user.

According to an embodiment, the method further comprising: receiving a call from another terminal, determining that the fingerprint input is a non-fingerprint-registered user that does not match either the first user's fingerprint or the second user's fingerprint, and displaying a message on the display unit indicating the non-fingerprint-register user.

According to an embodiment, the method further comprising: receiving the second user's fingerprint and corresponding security data transmitted from the terminal of the second user.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a block diagram illustrating a mobile terminal according to an embodiment disclosed in the present invention;
FIGS. 2A and 2B are conceptual views illustrating a communication system in which a mobile terminal according to the present invention is operable;
FIG. 3A is a front perspective view illustrating an example of a mobile terminal associated with the present invention;
FIG. 3B is a rear perspective view illustrating a mobile terminal illustrated in FIG. 3A;
FIG. 4 is a flow chart illustrating a mobile terminal according to an embodiment of the present invention;
FIG. 5 is a conceptual view illustrating an embodiment for executing the account of the fingerprint registered user;
FIG. 6 is a conceptual view illustrating an embodiment for transmitting content according to a fingerprint input;
FIG. 7 is a conceptual view illustrating an embodiment for entering a fingerprint to a plurality of terminals to transmit content;
FIG. 8 is a conceptual view illustrating an embodiment for displaying content stored in a plurality of terminals, respectively, on one terminal and transmitting the content according to a fingerprint input;
FIG. 9 is a conceptual view illustrating an embodiment for editing an image according to a fingerprint input;
FIG. 10 is a conceptual view illustrating an embodiment for registering a fingerprint with a terminal;
FIG. 11 is a conceptual view illustrating an embodiment for recommending fingerprint store;
FIG. 12 is a conceptual view illustrating an embodiment for setting up an executable application for each fingerprint registered user;
FIG. 13 is a conceptual view illustrating an embodiment of a user interface displayed for a non-fingerprint-registered user in a camera capture mode;
FIG. 14 is a conceptual view illustrating an embodiment of a user interface displayed for a fingerprint registered user in a camera capture mode;
FIG. 15 is a conceptual view illustrating an embodiment for showing only search records that have been searched by himself or herself according to fingerprint recognition;
FIG. 16 is a conceptual view illustrating an embodiment in which a message is shown on a calling or receiving terminal when a main user of the receiving terminal does not receive the receiving terminal;
FIG. 17 is a conceptual view illustrating an embodiment in which a message is shown on a calling terminal when a main user of the calling terminal does not call the calling terminal;
FIG. 18 is a conceptual view illustrating an embodiment in which a message is shown on a receiving terminal when a main user of the calling terminal does not call the calling terminal;
FIG. 19 is a conceptual view illustrating another embodiment for registering a fingerprint with a terminal;
FIG. 20 is a conceptual view illustrating an embodiment of security data transmission;
FIG. 21 is a conceptual view illustrating an embodiment for receiving fingerprint transmission to execute online payment;
FIG. 22 is a conceptual view illustrating an embodiment for verifying the caller of an overseas call according to a fingerprint input;
FIG. 23 is a conceptual view illustrating an embodiment for making a request for fingerprint transmission to verify the caller; and
FIG. 24 is a conceptual view illustrating an embodiment for approving a case where a third person posts personal information.

### DETAILED DESCRIPTION OF THE INVENTION

Hereinafter, preferred embodiments of the present invention will be described in detail with reference to the accompanying drawings, and the same or similar elements are designated with the same numeral references regardless of the numerals in the drawings and their redundant description will be omitted. A suffix "module" or "unit" used for constituent elements disclosed in the following description is merely intended for easy description of the specification, and the suffix itself does not give any special meaning or function. Also, it should be noted that the accompanying drawings are merely illustrated to easily explain the concept of the invention, and therefore, they should not be construed to limit the concept of the invention by the accompanying drawings.

A mobile terminal disclosed herein may include a portable phone, a smart phone, a laptop computer, a digital broadcast mobile device, a personal digital assistant (PDA), a mobile multimedia player (PMP), a navigation, a slate PC, a tablet PC, an ultrabook, and the like. However, a configuration according to the following description may be applicable to a stationary terminal such as a digital TV, a desktop computer, and the like, excluding constituent elements particularly configured for mobile purposes.

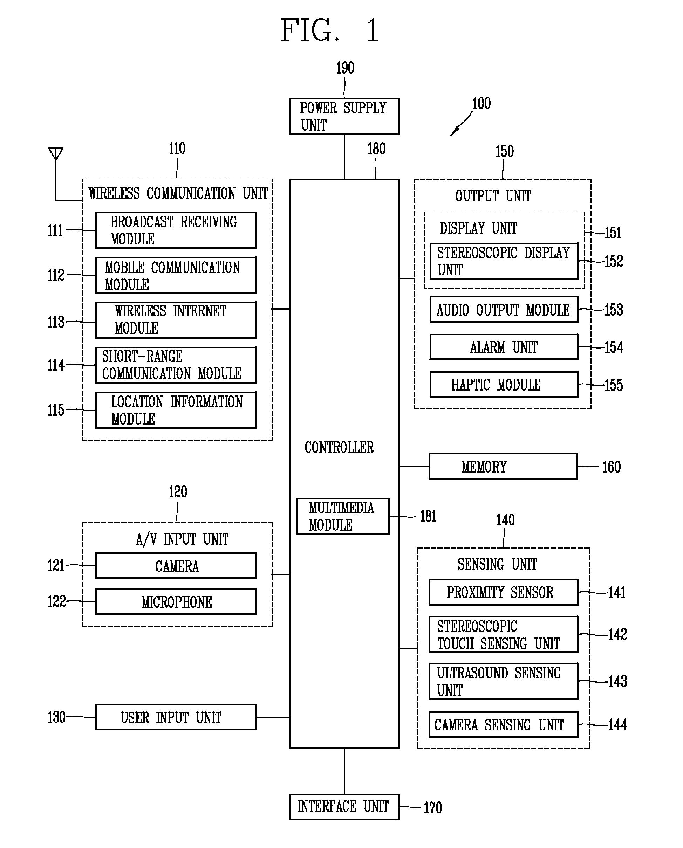

FIG. 1 is a block diagram illustrating a mobile terminal 100 according to an embodiment disclosed in the present invention. The mobile terminal 100 may include a wireless communication unit 110, an audio/video (A/V) input unit 120, a user input unit 130, a sensing unit 140, an output unit 150, a memory 160, an interface unit 170, a controller 180, a power supply unit 190, and the like. However, the mobile communication terminal may be implemented with greater or less number of elements than those illustrated elements.

The wireless communication unit 110 may include one or more modules allowing radio communication between the mobile terminal 100 and a wireless communication system, or allowing radio communication between the mobile terminal 100 and a network in which the mobile terminal 100 is located. For example, the wireless communication unit 110 may include at least one of a broadcast receiving module 111, a mobile communication module 112, a wireless Internet module 113, a short-range communication module 114, a location information module 115, and the like.

The broadcast receiving module 111 receives a broadcast signal and/or broadcast associated information from an external broadcast managing entity via a broadcast channel. The broadcast channel may include a satellite channel and a terrestrial channel. The broadcast managing entity may indicate a server which generates and transmits a broadcast signal and/or broadcast associated information or a server which receives a pre-generated broadcast signal and/or broadcast associated information and sends them to the mobile terminal. The broadcast signal may be implemented as a TV broadcast signal, a radio broadcast signal, and a data broadcast signal, among others. The broadcast signal may further include a data broadcast signal combined with a TV or radio broadcast signal.

Examples of broadcast associated information may include information associated with a broadcast channel, a broadcast program, a broadcast service provider, and the like. The broadcast associated information may be provided via a mobile communication network, and received by the mobile communication module 112. The broadcast associated information may be implemented in various formats. For instance, broadcast associated information may include Electronic Program Guide (EPG) of Digital Multimedia Broadcasting (DMB), Electronic Service Guide (ESG) of Digital Video Broadcast-Handheld (DVB-H), and the like.

The broadcast receiving module 111 may be configured to receive digital broadcast signals transmitted from various types of broadcast systems. Such broadcast systems may include Digital Multimedia Broadcasting-Terrestrial (DMB-T), Digital Multimedia Broadcasting-Satellite (DMB-S), Media Forward Link Only (MediaFLO), Digital Video Broadcast-Handheld (DVB-H), Integrated Services Digital Broadcast-Terrestrial (ISDB-T) and the like. Of course, the broadcast receiving module 111 may be configured to be suitable for every broadcast system transmitting broadcast signals as well as the digital broadcasting systems. Broadcast signals and/or broadcast associated information received via the broadcast receiving module 111 may be stored in a memory 160.

The mobile communication module 112 transmits and receives wireless signals to and from at least one a base station, an external terminal and a server on a mobile communication network. Here, the wireless signals may include audio call signals, video call signals, or various formats of data according to the transmission and reception of text/multimedia messages.

The mobile communication module 112 may be configured to implement a video communication mode and a voice communication mode. The video communication mode refers to a configuration in which communication is made while viewing the image of the counterpart, and the voice communication mode refers to a configuration in which communication is made without viewing the image of the counterpart. The mobile communication module 112 may be configured to transmit or receive at least one of audio or video data to implement the video communication mode and voice communication mode.

The wireless Internet module 113 refers to a module for supporting wireless Internet access, and may be built-in or externally installed on the mobile terminal 100. Here, it may be used a wireless Internet access technique including WLAN (Wireless LAN), Wi-Fi (Wireless Fidelity) Direct, DLNA (Digital Living Network Alliance), Wibro (Wireless Broadband), Wimax (World Interoperability for Microwave Access), HSDPA (High Speed Downlink Packet Access), and the like.

The short-range communication module 114 refers to a module for supporting a short-range communication. Here, it may be used a short-range communication technology including Bluetooth™, Radio Frequency IDentification (RFID), Infrared Data Association (IrDA), Ultra WideBand (UWB), ZigBee, Near Field Communication (NFC) and the like.

The location information module 115 is a module for checking or acquiring the location of the mobile terminal, and there is a Global Positioning Module (GPS) module or Wireless Fidelity (Wi-Fi) as a representative example.

Referring to FIG. 1, the A/V (audio/video) input unit 120 receives an audio or video signal, and the A/V (audio/video) input unit 120 may include a camera 121 and a microphone 122. The camera 121 processes image frames, such as still or moving images, obtained by an image sensor in a video phone call or image capturing mode. The processed image frame may be displayed on a display unit 151.

The image frames processed by the camera 121 may be stored in the memory 160 or transmitted to an external device through the wireless communication unit 110. Furthermore, the user's location information or the like may be produced from image frames acquired from the camera 121. Two or more cameras 121 may be provided according to the use environment.

The microphone 122 receives an external audio signal through a microphone in a phone call mode, a recording mode, a voice recognition mode, and the like, and processes the audio signal into electrical voice data. The processed voice data may be converted and output into a format that is transmittable to a mobile communication base station through the mobile communication module 112 in the phone call mode. The microphone 122 may implement various types of noise canceling algorithms to cancel noise generated in a procedure of receiving the external audio signal.

The user input unit 130 may generate input data to control an operation of the terminal. The user input unit 130 may be configured by including a keypad, a dome switch, a touch pad (pressure/capacitance), a jog wheel, a jog switch, and the like.

The sensing unit 140 detects a current status of the mobile terminal 100 such as an opened or closed configuration of the mobile terminal 100, a location of the mobile terminal 100, a presence or absence of user contact with the mobile terminal 100, an orientation of the mobile terminal 100, an acceleration/deceleration of the mobile terminal 100, and the like, so as to generate a sensing signal for controlling the operation of the mobile terminal 100. For example, when the mobile terminal 100 is a slide phone type, the sensing unit 140 may sense whether a sliding portion of the mobile terminal is open or closed. Other examples include sensing functions, such as the sensing unit 140 sensing the presence or absence of power provided by the power supply unit 190, the presence or absence of a coupling between the interface unit 170 and an external device.

The output unit 150 is configured to generate an output associated with visual sense, auditory sense or tactile sense, and may include a display unit 151, an audio output module 153, an alarm unit 154, a haptic module 155, and the like.

The display unit 151 may display (output) information processed in the mobile terminal 100. For example, when the mobile terminal 100 is in a phone call mode, the display unit 151 may display a User Interface (UI) or a Graphic User Interface (GUI) associated with a call. When the mobile terminal 100 is in a video call mode or image capturing mode, the display unit 151 may display a captured image and/or received image, a UI or GUI.

The display unit 151 may include at least one of a Liquid Crystal Display (LCD), a Thin Film Transistor-LCD (TFT-LCD), an Organic Light Emitting Diode (OLED) display, a flexible display, a three-dimensional (3D) display, and an e-ink display. Some of those displays may be configured with a transparent or optical transparent type to allow viewing of the exterior through the display unit, which may be called transparent displays. An example of the typical transparent displays may include a transparent LCD (TOLED), and the like. Under this configuration, a user can view an object positioned at a rear side of a mobile terminal body through a region occupied by the display unit 151 of the mobile terminal body.

Two or more display units 151 may be implemented according to a configured aspect of the mobile terminal 100. For instance, a plurality of the display units 151 may be arranged on one surface to be spaced apart from or integrated with each other, or may be arranged on different surfaces.

Furthermore, the display unit 151 may be configured with a stereoscopic display unit 152 for displaying a stereoscopic image. Here, stereoscopic image indicates a 3-dimensional stereoscopic image, and the 3-dimensional stereoscopic image is an image for allowing the user to feel the gradual depth and reality of an object located on the monitor or screen as in a real space. The 3-dimensional stereoscopic image may be implemented by using binocular disparity. Here, binocular disparity denotes a disparity made by the location of two eyes separated from each other, allowing the user to feel the depth and reality of a stereoscopic image when two eyes see different two-dimensional images and then the images are transferred through the retina and merged in the brain as a single image.

A stereoscopic method (glasses method), an auto-stereoscopic method (no-glasses method), a projection method (holographic method), and the like may be applicable to the stereoscopic display unit 152. The stereoscopic method primarily used in a home television receiver and the like may include a Wheatstone stereoscopic method and the like.

The examples of the auto-stereoscopic method may include a parallel barrier method, a lenticular method, an integral imaging method, and the like. The projection method may include a reflective holographic method, a transmissive holographic method, and the like.

In general, a 3-dimensional stereoscopic image may include a left image (image for the left eye) and a right image (image for the right eye). The method of implementing a 3-dimensional stereoscopic image can be divided into a top-down method in which a left image and a right image are disposed at the top and bottom within a frame, a left-to-right (L-to-R) or side by side method in which a left image and a right image are disposed at the left and right within a frame, a checker board method in which the pieces of a left image and a right image are disposed in a tile format, an interlaced method in which a left and a right image are alternately disposed for each column and row unit, and a time sequential or frame by frame method in which a left image and a right image are alternately displayed for each time frame, according to the method of combining a left image and a right image into a 3-dimensional stereoscopic image.

Furthermore, for 3-dimensional thumbnail images, a left image thumbnail and a right image thumbnail may be generated from the left and the right image of the original image frame, and then combined with each other to generate a 3-dimensional stereoscopic image. Typically, thumbnail denotes a reduced image or reduced still video. The left and right thumbnail image generated in this manner are displayed with a left and right distance difference on the screen in a depth corresponding to the disparity of the left and right image, thereby implementing a stereoscopic space feeling.

A left image and a right image required to implement a 3-dimensional stereoscopic image are displayed on the stereoscopic display unit 152 by a stereoscopic processing unit. The stereoscopic processing unit receives a 3D image to extract a left image and a right image from the 3D image, or receives a 2D image to convert it into a left image and a right image.

Further, when the display unit 151 and a touch sensitive sensor (hereinafter, referred to as a "touch sensor") have an interlayer structure (hereinafter, referred to as a "touch screen"), the display unit 151 may be used as an input device in addition to an output device. The touch sensor may be implemented as a touch film, a touch sheet, a touch pad, and the like.

The touch sensor may be configured to convert changes of a pressure applied to a specific part of the display unit 151, or a capacitance occurring from a specific part of the display unit 151, into electric input signals. The touch sensor may be configured to sense not only a touched position and a touched area, but also a touch pressure at which a touch object body is touched on the touch sensor. Here, the touch object body may be a finger, a touch pen or stylus pen, a pointer, or the like as an object by which a touch is applied to the touch sensor.

When there is a touch input to the touch sensor, the corresponding signals are transmitted to a touch controller. The touch controller processes the signal(s), and then transmits the corresponding data to the controller 180. Accordingly, the controller 180 can sense which region of the display unit 151 has been touched.

Referring to FIG. 1, a proximity sensor 141 may be arranged at an inner region of the mobile device 100 surrounded by the touch screen, or adjacent to the touch screen. The proximity sensor 141 may be provided as an example of the sensing unit 140. The proximity sensor 141 refers to a sensor to sense the presence or absence of an object approaching to a surface to be sensed, or an object disposed adjacent to a surface to be sensed, by using an electromagnetic field or infrared rays without a mechanical contact. The proximity sensor 141 has a longer lifespan and a more enhanced utility than a contact sensor.

The proximity sensor 141 may include an optical transmission type photoelectric sensor, a direct reflective type photoelectric sensor, a mirror reflective type photoelectric sensor, a highfrequency oscillation proximity sensor, a capacitance type proximity sensor, a magnetic type proximity sensor, an infrared rays proximity sensor, and so on. When the touch screen is implemented as a capacitance type, the proximity of an object having conductivity (hereinafter, referred to as a "pointer") to the touch screen is sensed by changes of an electromagnetic field. In this instance, the touch screen (touch sensor) may be categorized into a proximity sensor.

Hereinafter, for the sake of convenience of brief explanation, a behavior that the pointer is positioned to be proximate onto the touch screen without contact will be referred to as a "proximity touch", whereas a behavior that the pointer substantially comes in contact with the touch screen will be referred to as a "contact touch". For the position corresponding to the proximity touch of the pointer on the touch screen, such position corresponds to a position where the pointer faces perpendicular to the touch screen upon the proximity touch of the pointer.

The proximity sensor 141 senses a proximity touch, and a proximity touch pattern (e.g., proximity touch distance, proximity touch direction, proximity touch speed, proximity touch time, proximity touch position, proximity touch moving status, etc.). Information relating to the sensed proximity touch and the sensed proximity touch patterns may be output onto the touch screen.

When the stereoscopic display unit 152 and a touch sensor are configured with an interlayer structure (hereinafter, referred to as a "stereoscopic touch screen") or the stereoscopic display unit 152 and a 3D sensor for detecting a touch operation are combined with each other, the stereoscopic display unit 152 may be used as a 3-dimensional input device. As an example of the 3D sensor, the sensing unit 140 may include a proximity sensor 141, a stereoscopic touch sensing unit 142, an ultrasound sensing unit 143, and a camera sensing unit 144.

The proximity sensor 141 measures a distance between the sensing object (for example, the user's finger or stylus pen) and a detection surface to which a touch is applied using an electromagnetic field or infrared rays without a mechanical contact. The terminal may recognize which portion of a stereoscopic image has been touched by using the measured distance. In particular, when the touch screen is implemented with a capacitance type, it may be configured such that the proximity level of a sensing object is sensed by changes of an electromagnetic field according to the proximity of the sensing object to recognize a 3-dimensional touch using the proximity level.

The stereoscopic touch sensing unit 142 may be configured to sense the strength or duration time of a touch applied to the touch screen. For example, stereoscopic touch sensing unit 142 senses a user applied touch pressure, and if the applied pressure is strong, then the stereoscopic touch sensing unit 142 recognizes it as a touch for an object located farther from the touch screen.

The ultrasound sensing unit 143 may be configured to sense the location of the sensing object using ultrasound. For example, the ultrasound sensing unit 143 may be configured with an optical sensor and a plurality of ultrasound sensors. The optical sensor may be formed to sense light, and the ultrasound sensor may be formed to sense ultrasound waves. Since light is far faster than ultrasound waves, the time for light to reach the optical sensor is far faster than the time for ultrasound waves to reach the ultrasound sensor. Accordingly, the location of the wave generating source may be calculated using a time difference between the light and ultrasound waves to reach the optical sensor.

The camera sensing unit 144 may include at least one of a camera 121, a photo sensor, and a laser sensor. For example, the camera 121 and laser sensor may be combined to each other to sense a touch of the sensing object to a 3-dimensional stereoscopic image. Distance information sensed by the laser sensor is added to a two-dimensional image captured by the camera to acquire 3-dimensional information.

In another example, a photo sensor may be deposited on the display element. The photo sensor may be configured to scan the motion of the sensing object in proximity to the touch screen. More specifically, the photo sensor is integrated with photo diodes and transistors in the rows and columns thereof, and content placed on the photo sensor may be scanned by using an electrical signal that is changed according to the amount of light applied to the photo diode. In other words, the photo sensor performs the coordinate calculation of the sensing object according to the changed amount of light, and the location coordinate of the sensing object may be detected through this.

The audio output module 153 may output audio data received from the wireless communication unit 110 or stored in the memory 160, in a call-receiving mode, a call-placing mode, a recording mode, a voice recognition mode, a broadcast reception mode, and so on. The audio output module 153 may output audio signals relating to the functions performed in the mobile terminal 100 (e.g., sound alarming a call received or a message received, and so on). The audio output module 153 may include a receiver, a speaker, a buzzer, and so on.

The alarm 154 outputs signals notifying occurrence of events from the mobile terminal 100. The events occurring from the mobile terminal 100 may include call received, message received, key signal input, touch input, and so on. The alarm 154 may output not only video or audio signals, but also other types of signals such as signals notifying occurrence of events in a vibration manner. Since the video or audio signals can be output through the display unit 151 or the audio output unit 153, the display unit 151 and the audio output module 153 may be categorized into part of the alarm 154.

The haptic module 155 generates various tactile effects which a user can feel. A representative example of the tactile effects generated by the haptic module 154 includes vibration. Vibration generated by the haptic module 154 may have a controllable intensity, a controllable pattern, and so on. For instance, different vibration may be output in a synthesized manner or in a sequential manner.

The haptic module 155 may generate various tactile effects, including not only vibration, but also arrangement of pins vertically moving with respect to a skin being touched, air injection force or air suction force through an injection hole or a suction hole, touch by a skin surface, presence or absence of contact with an electrode, effects by stimulus such as an electrostatic force, reproduction of cold or hot feeling using a heat absorbing device or a heat emitting device, and the like.

The haptic module 155 may be configured to transmit tactile effects through a user's direct contact, or a user's muscular sense using a finger or a hand. The haptic module 155 may be implemented in two or more in number according to the configuration of the mobile terminal 100.

The memory 160 may store a program for processing and controlling the controller 180. Alternatively, the memory 160 may temporarily store input/output data (e.g., phonebook, messages, still images, videos, and the like). Also, the memory 160 may store data related to various patterns of vibrations and sounds output upon the touch input on the touch screen.

The memory 160 may be implemented using any type of suitable storage medium including a flash memory type, a hard disk type, a multimedia card micro type, a memory card type (e.g., SD or DX memory), Random Access Memory (RAM), Static Random Access Memory (SRAM), Read-Only Memory (ROM), Electrically Erasable Programmable Read-only Memory (EEPROM), Programmable Read-only Memory (PROM), magnetic memory, magnetic disk, optical disk, and the like. Also, the mobile terminal 100 may operate in association with a web storage which performs the storage function of the memory 160 on the Internet.

The interface unit 170 may generally be implemented to interface the mobile terminal with external devices connected to the mobile terminal 100. The interface unit 170 may allow a data reception from an external device, a power delivery to each component in the mobile terminal 100, or a data transmission from the mobile terminal 100 to an external device. The interface unit 170 may include, for example, wired/wireless headset ports, external charger ports, wired/wireless data ports, memory card ports, ports for coupling devices having an identification module, audio Input/Output (I/O) ports, video I/O ports, earphone ports, and the like.

Further, the identification module may be configured as a chip for storing various information required to authenticate an authority to use the mobile terminal 100, which may include a User Identity Module (UIM), a Subscriber Identity Module (SIM), and the like. Also, the device having the identification module (hereinafter, referred to as "identification device") may be implemented in a type of smart card. Hence, the identification device can be coupled to the mobile terminal 100 via a port.

Furthermore, the interface unit 170 may serve as a path for power to be supplied from an external cradle to the mobile terminal 100 when the mobile terminal 100 is connected to the external cradle or as a path for transferring various command signals input from the cradle by a user to the mobile terminal 100. Such various command signals or power input from the cradle may operate as signals for recognizing that the mobile terminal 100 has accurately been mounted to the cradle.

The controller 180 typically controls the overall operations of the mobile terminal 100. For example, the controller 180 performs the control and processing associated with telephony calls, data communications, video calls, and the like. The controller 180 can include a multimedia module 181 which provides multimedia playback. The multimedia module 181 may be configured as part of the controller 180 or as a separate component.

Furthermore, the controller 180 can perform a pattern recognition processing so as to recognize writing or drawing input performed on the touch screen as text or image. The controller 180 can also implement a lock state for limiting the user's control command input to applications when the state of the mobile terminal satisfies a preset condition. Furthermore, the controller 180 can control a lock screen displayed in the lock state based on a touch input sensed through the display unit 151 in the lock state.

The power supply unit 190 receives external and internal power to provide power required for various components under the control of the controller 180.

Various embodiments described herein may be implemented in a computer or similar device readable medium using software, hardware, or any combination thereof.

For a hardware implementation, it may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and electrical units designed to perform the functions described herein. In some cases, such embodiments may be implemented in the controller 180.

For a software implementation, the embodiments such as procedures or functions described in the present invention may be implemented with separate software modules. Each of the software modules may perform at least one function or operation described in the present invention. Software codes can be implemented by a software application written in any suitable programming language. The software codes may be stored in the memory 160 and executed by the controller 180.

Next, a communication system that can be implemented through the mobile terminal 100 according to an embodiment of the present invention will be described.

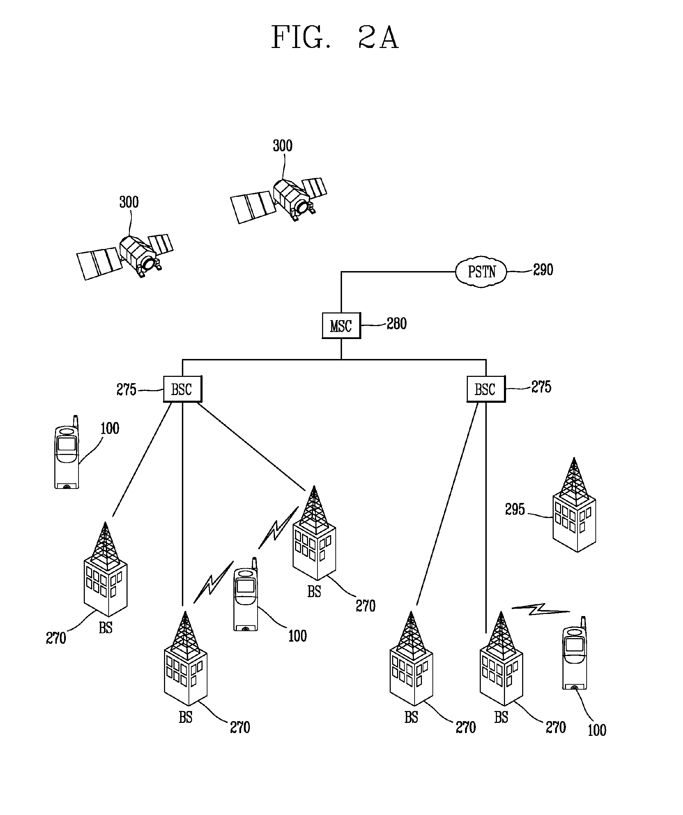

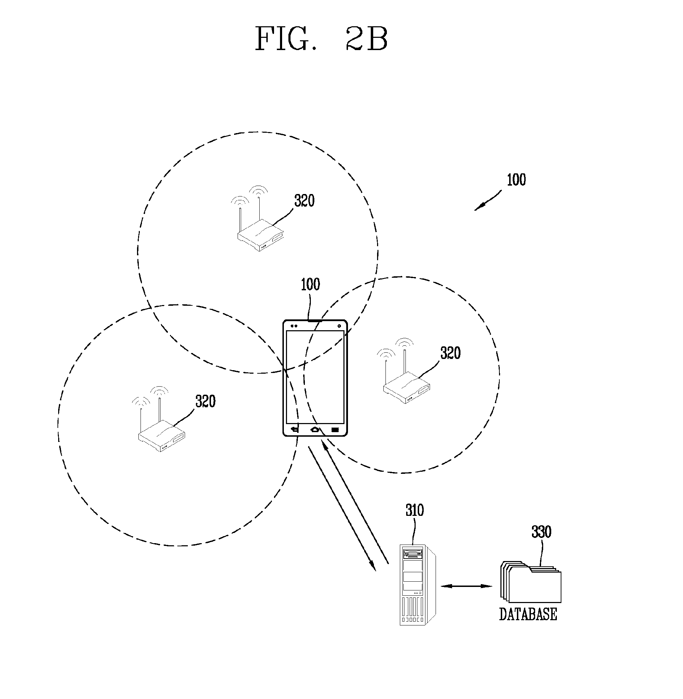

FIGS. 2A and 2B are conceptual views illustrating a communication system in which a mobile terminal 100 according to the present invention is operable. First, referring to FIG. 2A, the communication system may use different wireless interfaces and/or physical layers. For example, wireless interfaces that can be used by the communication system may include, frequency division multiple access (FDMA), time division multiple access (TDMA), code division multiple access (CDMA), universal mobile telecommunications system (UMTS) (particularly, long term evolution (LTE)), global system for mobile communications (GSM), and the like.

Hereinafter, for the sake of convenience of explanation, the description disclosed herein will be limited to CDMA. However, it is apparent that the present invention may be also applicable to all communication systems including a CDMA wireless communication system.

As illustrated in FIG. 2A, a CDMA wireless communication system may include a plurality of terminals 100, a plurality of base stations (BSs) 270, a plurality of base station controllers (BSCs) 275, and a mobile switching center (MSC) 280. The MSC 280 may interface with a Public Switched Telephone Network (PSTN) 290, and the MSC 280 may also interface with the BSCs 275. The BSCs 275 may be connected to the BSs 270 via backhaul lines. The backhaul lines may be configured in accordance with at least any one of E1/T1, ATM, IP, PPP, Frame Relay, HDSL, ADSL, or xDSL, for example. Further, the system illustrated in FIG. 2A may include a plurality of BSCs 275.

Each of the plurality of BSs 270 may include at least one sector, each sector having an omni-directional antenna or an antenna indicating a particular radial direction from the base station 270. Alternatively, each sector may include two or more antennas with various forms. Each of the BSs 270 may be configured to support a plurality of frequency assignments, each frequency assignment having a particular spectrum (for example, 1.25 MHz, 5 MHz, etc.).

The intersection of a sector and frequency assignment may be referred to as a CDMA channel. The BSs 270 may also be referred to as Base Station Transceiver Subsystems (BTSs). In this instance, the term "base station" may collectively refer to a BSC 275, and at least one BS 270. The base stations may also indicate "cell sites". Alternatively, individual sectors for a specific BS 270 may also be referred to as a plurality of cell sites.

As illustrated in FIG. 2A, the Broadcasting Transmitter (BT) 295 may transmit broadcasting signals to the mobile terminals 100 being operated within the system. The broadcast receiving module 111 as illustrated in FIG. 1 may be provided in the mobile terminal 100 to receive broadcast signals transmitted by the BT 295.

In addition, FIG. 2A illustrates several global positioning system (GPS) satellites 300. Such satellites 300 facilitate locating at least one of a plurality of mobile terminals 100. Though two satellites are illustrated in FIG. 2A, location information may be obtained with a greater or fewer number of satellites. The location information module 115 as illustrated in FIG. 1 may cooperate with the satellites 300 as illustrated in FIG. 2A to obtain desired location information. However, other types of position detection technology, all types of technologies capable of tracing the location may be used in addition to a GPS location technology. Furthermore, at least one of the GPS satellites 300 may alternatively or additionally provide satellite DMB transmissions.

During the operation of a wireless communication system, the BS 270 may receive reverse-link signals from various mobile terminals 100. At this time, the mobile terminals 100 may perform calls, message transmissions and receptions, and other communication operations. Each reverse-link signal received by a specific base station 270 may be processed within that specific base station 270. The processed resultant data may be transmitted to an associated BSC 275. The BSC 275 may provide call resource allocation and mobility management functions including the systemization of soft handoffs between the base stations 270. Furthermore, the BSCs 275 may also transmit the received data to the MSC 280, which provides additional transmission services for interfacing with the PSTN 290. Furthermore, similarly, the PSTN 290 may interface with the MSC 280, and the MSC 280 may interface with the BSCs 275. The BSCs 275 may also control the BSs 270 to transmit forward-link signals to the mobile terminals 100.

Next, a method of acquiring the location information of a mobile terminal using a Wi-Fi (Wireless Fidelity) positioning system (WPS) will be described with reference to FIG. 2B. The Wi-Fi positioning system (WPS) 300 refers to a location determination technology based on a wireless local area network (WLAN) using Wi-Fi as a technology for tracking the location of the mobile terminal 100 using a Wi-Fi module provided in the mobile terminal 100 and a wireless access point 320 for transmitting and receiving to and from the Wi-Fi module.

The Wi-Fi positioning system 300 may include a Wi-Fi location determination server 310, a mobile terminal 100, a wireless access point (AP) 320 connected to the mobile terminal 100, and a database 330 stored with any wireless AP information.

The Wi-Fi location determination server 310 extracts the information of the wireless AP 320 connected to the mobile terminal 100 based on a location information request message (or signal) of the mobile terminal 100. The information of the wireless AP 320 may be transmitted to the Wi-Fi location determination server 310 through the mobile terminal 100 or transmitted to the Wi-Fi location determination server 310 from the wireless AP 320.

The information of the wireless AP extracted based on the location information request message of the mobile terminal 100 may be at least one of MAC address, SSID, RSSI, channel information, privacy, network type, signal strength and noise strength. The Wi-Fi location determination server 310 receives the information of the wireless AP 320 connected to the mobile terminal 100 as described above, and compares the received wireless AP 320 information with information contained in the pre-established database 330 to extract (or analyze) the location information of the mobile terminal 100.

Further, referring to FIG. 2B, as an example, the wireless AP connected to the mobile terminal 100 is illustrated as a first, a second, and a third wireless AP 320. However, the number of wireless APs connected to the mobile terminal 100 may be changed in various ways according to a wireless communication environment in which the mobile terminal 100 is located. When the mobile terminal 100 is connected to at least one of wireless APs, the Wi-Fi positioning system 300 can track the location of the mobile terminal 100.

Next, considering the database 330 stored with any wireless AP information in more detail, various information of any wireless APs disposed at different locations may be stored in the database 330. The information of any wireless APs stored in the database 330 may be information such as MAC address, SSID, RSSI, channel information, privacy, network type, latitude and longitude coordinate, building at which the wireless AP is located, floor number, detailed indoor location information (GPS coordinate available), AP owner's address, phone number, and the like.

Thus, any wireless AP information and location information corresponding to the any wireless AP are stored together in the database 330, and thus the Wi-Fi location determination server 310 may retrieve wireless AP information corresponding to the information of the wireless AP 320 connected to the mobile terminal 100 from the database 330 to extract the location information matched to the searched wireless AP, thereby extracting the location information of the mobile terminal 100.

Furthermore, the extracted location information of the mobile terminal 100 may be transmitted to the mobile terminal 100 through the Wi-Fi location determination server 310, thereby acquiring the location information of the mobile terminal 100.

Hereinafter, a mobile terminal according to an embodiment of the present invention as illustrated in FIG. 1 or a mobile terminal disposed with the constituent elements of the mobile terminal or the structure of a mobile terminal will be described.

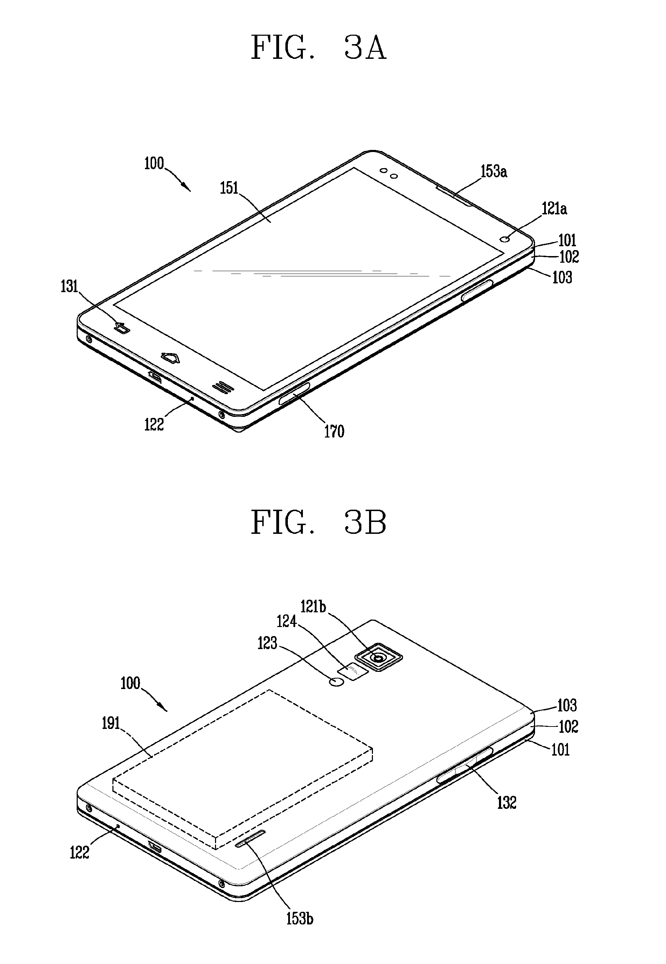

FIG. 3A is a front perspective view illustrating an example of the mobile terminal 100 associated with the present invention. The mobile terminal 100 disclosed herein is provided with a bar-type terminal body. However, the present invention is not limited to this, but also is applicable to various structures such as watch type, clip type, glasses type or folder type, flip type, swing type, swivel type, or the like, in which two and more bodies are combined with each other in a relatively movable manner.

The body includes a case (casing, housing, cover, etc.) forming the appearance of the terminal. In this embodiment, the case may be divided into a front case 101 and a rear case 102. Various electronic components are incorporated into a space formed between the front case 101 and the rear case 102. At least one middle case may be additionally disposed between the front case 101 and the rear case 102, and a battery cover 103 for covering the battery 191 may be detachably configured at the rear case 102. The cases may be formed by injection-molding a synthetic resin or may be also formed of a metal, for example, stainless steel (STS), titanium (Ti), or the like.

A display unit 151, a first audio output module 153a, a first camera 121a, a first manipulating unit 131 and the like may be disposed on a front surface of the terminal body, and a microphone 122, an interface unit 170, a second manipulating unit 132 and the like may be provided on a lateral surface thereof.

The display unit 151 may be configured to display (output) information being processed in the mobile terminal 100. The display unit 151 may include at least one of a liquid crystal display (LCD), a thin film transistor-liquid crystal display (TFT-LCD), an organic light emitting diode (OLED) display, a flexible display, a 3-dimensional (3D) display, and an e-ink display.

The display unit 151 may include a touch sensing mechanism to receive a control command by a touch method. When a touch is made to any one place on the display unit 151, the touch sensing mechanism may be configured to sense this touch and enter the content corresponding to the touched place. The content entered by a touch method may be a text or numerical value, or a menu item capable of indication or designation in various modes.

The touch sensing mechanism may be formed with transparency to allow visual information displayed on the display unit 151 to be seen, and may include a structure for enhancing the visibility of a touch screen at bright places. Referring to FIG. 3A, the display unit 151 occupies a most portion of the front surface of the front case 101.

The first audio output unit 153a and the first camera 121a are disposed in a region adjacent to one of both ends of the display unit 151, and the first manipulation input unit 131 and the microphone 122 are disposed in a region adjacent to the other end thereof. The second manipulation interface 132 (refer to FIG. B), the interface 170, and the like may be disposed on a lateral surface of the terminal body.

The first audio output module 153a may be implemented in the form of a receiver for transferring voice sounds to the user's ear or a loud speaker for outputting various alarm sounds or multimedia reproduction sounds. It may be configured such that the sounds generated from the first audio output module 153a are released along an assembly gap between the structural bodies. In this instance, a hole independently formed to output audio sounds may not be seen or hidden in terms of appearance, thereby further simplifying the appearance of the mobile terminal 100. However, the present invention may not be limited to this, but a hole for releasing the sounds may be formed on the window.

The first camera 121 a processes video frames such as still or moving images obtained by the image sensor in a video call mode or capture mode. The processed video frames may be displayed on the display unit 151. The user input unit 130 is manipulated to receive a command for controlling the operation of the mobile terminal 100. The user input unit 130 may include a first and a second manipulation unit 131, 132. The first and the second manipulation unit 131, 132 may be commonly referred to as a manipulating portion, and any method may be employed if it is a tactile manner allowing the user to perform manipulation with a tactile feeling such as touch, push, scroll or the like.

In the present drawing, it is illustrated on the basis that the first manipulation unit 131 is a touch key, but the present invention is not limited to this. For example, the first manipulation unit 131 may be configured with a mechanical key, or a combination of a touch key and a mechanical key.

The content received by the first and/or second manipulation units 131, 132 may be set in various ways. For example, the first manipulation unit 131 may be used to receive a command such as menu, home key, cancel, search, or the like, and the second manipulation unit 132 may receive a command, such as controlling a volume level being output from the first audio output module 153a, or switching into a touch recognition mode of the display unit 151. The microphone 122 may be formed to receive the user's voice, other sounds, or the like. The microphone 122 may be provided at a plurality of places, and configured to receive stereo sounds.

The interface unit 170 serves as a path allowing the mobile terminal 100 to exchange data with external devices. For example, the interface unit 170 may be at least one of a connection terminal for connecting to an earphone in a wired or wireless manner, a port for near field communication (for example, an Infrared Data Association (IrDA) port, a Bluetooth port, a wireless LAN port, and the like), and a power supply terminal for supplying power to the mobile terminal 100. The interface unit 170 may be implemented in the form of a socket for accommodating an external card such as Subscriber Identification Module (SIM) or User Identity Module (UIM), and a memory card for information storage.

FIG. 3B is a rear perspective view illustrating mobile terminal 100 illustrated in FIG. 3A. Referring to FIG. 3B, a second camera 121b may be additionally mounted at a rear surface of the terminal body, namely, the rear case 102. The second camera 121b has an image capturing direction, which is substantially opposite to the direction of the first camera unit 121a (refer to FIG. 3A), and may have a different number of pixels from that of the first camera unit 121 a.

For example, it is preferable that the first camera 121 a has a relatively small number of pixels enough not to cause difficulty when the user captures his or her own face and sends it to the other party during a video call or the like, and the second camera 121 b has a relatively large number of pixels since the user often captures a general object that is not sent immediately. The first and the second camera 121a, 121b may be provided in the terminal body in a rotatable and popupable manner.

Furthermore, a flash 123 and a mirror 124 may be additionally disposed adjacent to the second camera 121 b. The flash 123 illuminates light toward an object when capturing the object with the second camera 121b. The mirror 124 allows the user to look at his or her own face, or the like, in a reflected way when capturing himself or herself (in a self-portrait mode) by using the second camera 121 b.

A second audio output unit 153b may be additionally disposed at a rear surface of the terminal body. The second audio output unit 153b together with the first audio output unit 153a (refer to FIG. 3A) can implement a stereo function, and may be also used to implement a speaker phone mode during a phone call.

An antenna for receiving broadcast signals may be additionally disposed at a lateral surface of the terminal body in addition to an antenna for making a phone call or the like. The antenna constituting part of the broadcast receiving module 111 may be provided in the terminal body in a retractable manner.

A power supply unit 190 for supplying power to the mobile terminal 100 may be mounted on the terminal body. The power supply unit 190 may be incorporated into the terminal body, or may include a battery 191 configured in a detachable manner on the outside of the terminal body. According to the drawing, it is illustrated that the battery cover 103 is combined with the rear case 102 to cover the battery 191, thereby restricting the battery 191 from being released and protecting the battery 191 from external shocks and foreign substances.

Further, the mobile terminal may recognize a user's fingerprint entered. However, in the related art, only a limited feature such as implementing lock release using the fingerprint input for the owner of the terminal has been performed. Accordingly, the mobile terminal 100 and control method thereof capable of receiving fingerprints for the owner of the terminal as well as a user whose fingerprint is registered with the terminal to implement various functions, thereby enhancing the user's convenience, will be described below with reference to the accompanying drawings.

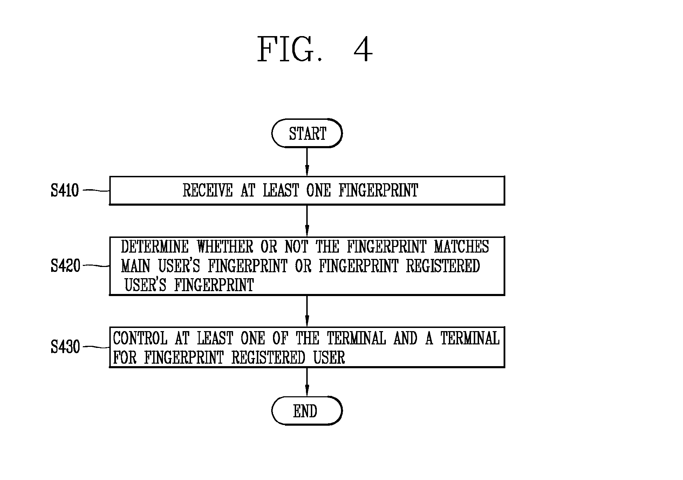

FIG. 4 is a flow chart illustrating a mobile terminal 100 according to an embodiment of the present invention. Referring to FIG. 4, first, the process of receiving at least one fingerprint is performed (S410).

Specifically, the user may touch the display unit 151 to enter his or her fingerprint. Furthermore, a plurality of users may concurrently or sequentially touch the display unit 151 to enter their fingerprints. Subsequently, the process (S420) of determining whether the entered at least one fingerprint matches a main user's fingerprint for the terminal or matches a fingerprint registered user's fingerprint whose fingerprint is registered with the terminal other than the main user is performed.

Thus, a user's fingerprint to be set up as a main user for the terminal may be registered in advance. Furthermore, the fingerprints of other users other than the main user may be also registered. For example, the main user may be a primary user of the terminal or the owner of the terminal. However, the main user for the terminal may not be necessarily a primary user or owner, and the main user for the terminal may be set up at his or her own discretion.

Next, the process (S430) of controlling at least one of the terminal and a terminal for the fingerprint registered user according to the determined result is performed. Specifically, the terminal for the fingerprint registered user denotes a terminal that has been set up in advance to correspond to the fingerprint registered user. For example, the fingerprint registered user may be a primary user of the terminal for the fingerprint registered user or the owner of the terminal for the fingerprint registered user.

However, it is not necessarily required to have such a relationship, and a corresponding relationship between the fingerprint registered user and the terminal for the fingerprint registered user may be set up at his or her own discretion. Further, when the controller 180 determines that a fingerprint registered user's fingerprint has been entered, it is possible to execute the account of the terminal for the fingerprint registered user.

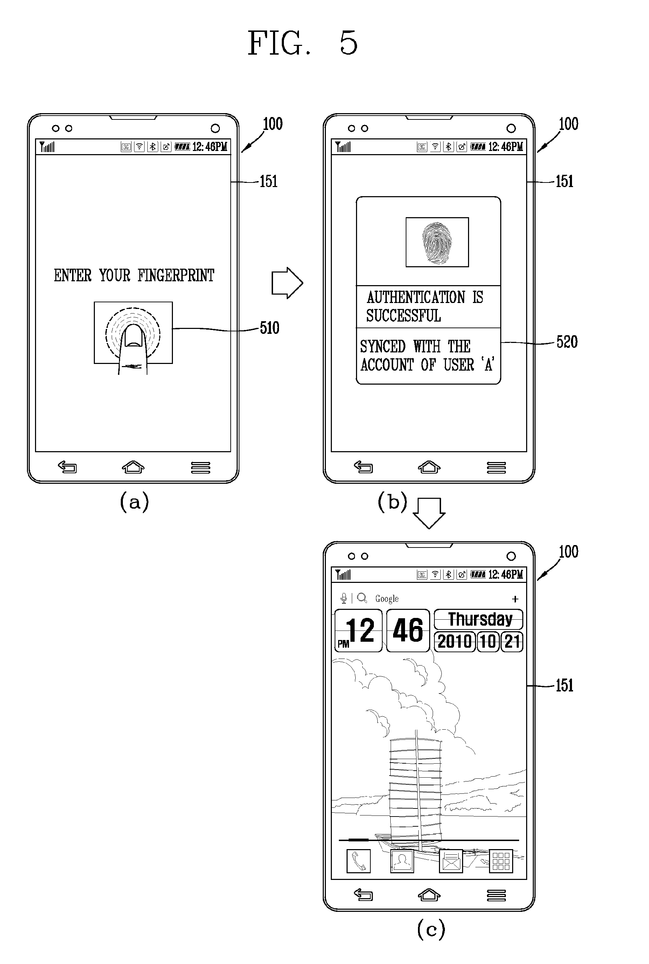

FIG. 5 is a conceptual view illustrating an embodiment for executing the account of the fingerprint registered user. Referring to FIG. 5(a), a user interface capable of entering a fingerprint may be displayed. In one embodiment, when touching a lock screen with his or her finger, a user interface for fingerprint recognition may be displayed. Accordingly, the user makes a long touch to the fingerprint input field 510 with his or her finger to enter his or her fingerprint.

In another embodiment, when dragging a status bar, an icon capable of displaying a user interface for fingerprint recognition may be unfolded. In still another embodiment, when pushing or touching a home key or back key on a lock screen, a user interface for fingerprint recognition may be displayed.

Referring to FIG. 5(b), when the controller 180 determines that a registered user's fingerprint has been entered to the terminal, a popup window 520 indicating that authentication is successful may be displayed. Referring to FIG. 5(c), a screen synchronized with the account of the fingerprint registered user may be displayed. For example, a home screen of the terminal for the fingerprint registered user may be displayed.

In other words, the fingerprint registered user may enter his or her fingerprint to obtain authentication, and then use a third person's terminal like a terminal for the fingerprint registered user. Further, when the controller 180 determines that at least one fingerprint registered user's fingerprint has been entered by touching content displayed on the display unit 151, the controller can transmit the content to a terminal for the at least one fingerprint registered user, respectively.

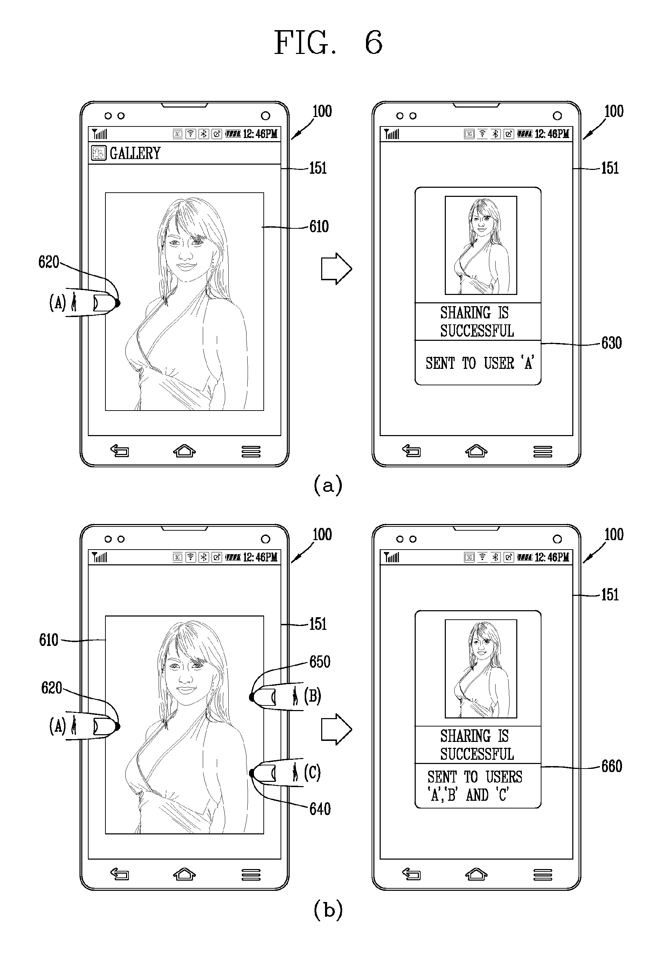

Next, FIG. 6 is a conceptual view illustrating an embodiment for transmitting content according to a fingerprint input. Referring to FIG. 6(a), when a first fingerprint registered user "A" applies a touch input 620 to a photo 610 displayed on the photo album (gallery), the fingerprint of user "A" is entered.

Accordingly, when confirmed that the fingerprint of user "A" has been registered, the photo 610 is transmitted to the terminal for user "A". Furthermore, a popup window 630 indicating that the photo 610 has been transmitted to the terminal for user "A" can be displayed on the terminal.

Referring to FIG. 6(b), when a first fingerprint registered user "A", a second fingerprint registered user "B" and a third fingerprint registered user "C" concurrently or sequentially apply touch inputs 620, 640, 650 to the photo 610 displayed on the photo album, the fingerprints of the users "A", "B" and "C" are entered.

Accordingly, when confirmed that the fingerprints of the users "A", "B" and "C" have been registered, the photo 610 can be transmitted to the terminals for the users "A", "B" and "C". Furthermore, a popup window 660 indicating that the photo 610 has been transmitted to the terminals for the users "A", "B" and "C" may be displayed on the terminal.

In one embodiment, the fingerprint registered user may touch content such as a photo, a document, a video or the like to transmit the content to a terminal for the fingerprint registered user. In another embodiment, content touched and selected by the fingerprint registered user may be transmitted to a terminal for the fingerprint registered user through a text message, SNS, an e-mail, or the like.

In still another embodiment, when a main user of the first terminal enters his fingerprint to the first and the second terminal, content that has been displayed on the first terminal may be transmitted to the second terminal. Otherwise, when a fingerprint registered user of the first terminal enters his fingerprint to the first and the second terminals, content that has been displayed on the first terminal can be transmitted to the second terminal.

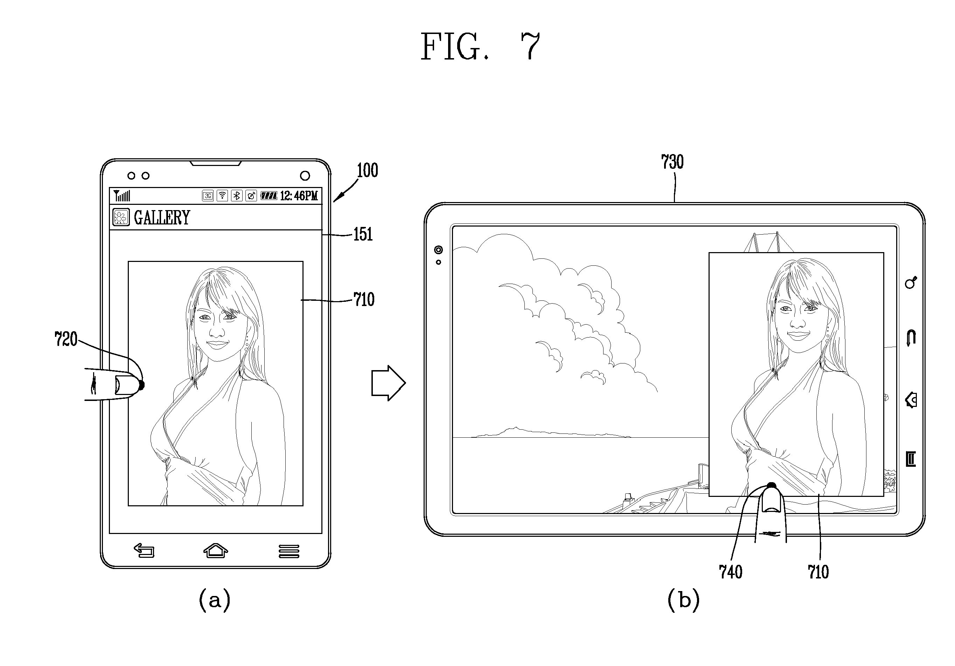

FIG. 7 is a conceptual view illustrating an embodiment for entering a fingerprint to a plurality of terminals to transmit content. Referring to FIG. 7(a), a main user of the mobile terminal 100 may apply a touch input 720 to a photo 710 displayed on the photo album to enter his or her fingerprint. Furthermore, the main user of the mobile terminal 100 may concurrently or sequentially apply a touch input 740 to the screen of a tablet 730.

Referring to FIG. 7(b), the photo 710 to which the touch input 720 has been applied is transmitted from the mobile terminal 100 to the tablet 730 and displayed thereon. In yet still another embodiment, when a browser is executed in the terminal 100, the relevant browser may be immediately executed on the tablet 730 according to concurrent or sequential fingerprint inputs.

Further, when the controller 180 determines that the main user's fingerprint and the fingerprint registered user's fingerprint have been entered to a photo album displayed on the display unit 151, the controller 180 can display content contained in the photo album of the terminal and content contained in the photo album of the terminal for the fingerprint registered user on the first and the second screen, respectively, into which the display unit 151 is divided.

Furthermore, the controller 180 can display content displayed on the first screen also on the second screen according to a drag input, and transmit the content to a terminal for the fingerprint registered user.

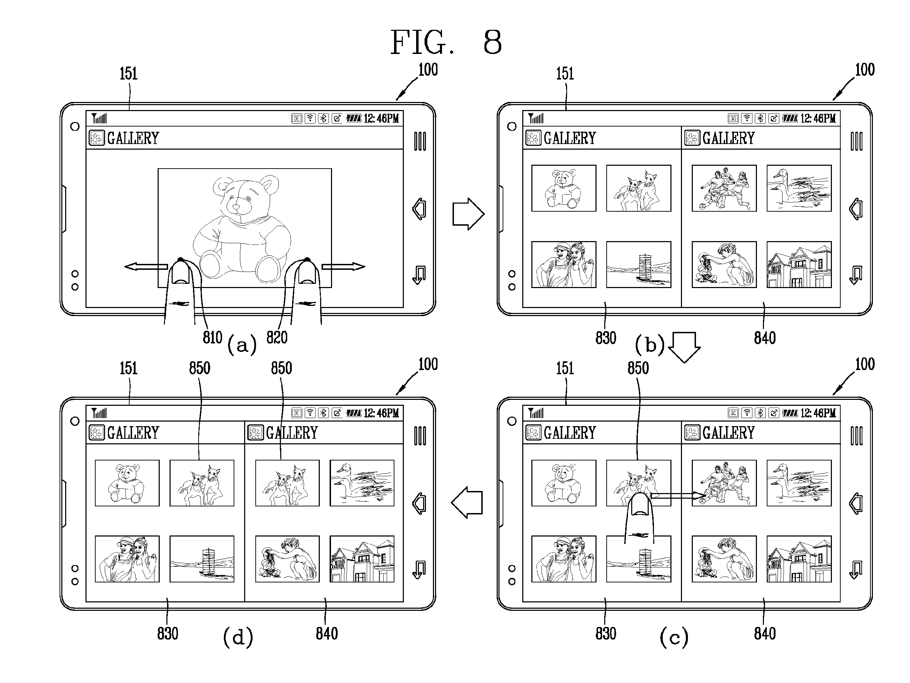

Next, FIG. 8 is a conceptual view illustrating an embodiment for displaying content stored in a plurality of terminals, respectively, on one terminal and transmitting the content according to a fingerprint input. Referring to FIG. 8(a), a main user and a fingerprint registered user may apply a pinch-out input 810, 820 to the photo album. During the pinch-out input 810, 820, the fingerprints of the main user and fingerprint registered user are entered.

Referring to FIG. 8(b), the display unit 151 may be divided into a first and a second screen 830, 840 to display content contained in the main user's photo album on the first screen 830 and display content contained in the fingerprint registered user's photo album on the second screen 840.

Referring to FIG. 8(c), the main user may apply an input for dragging one 850 of contents contained in the first screen 830 to the second screen 840. Referring to FIG. 8(d), the dragged content 850 may be also displayed on the second screen 840 according to a drag input in FIG. 8(c). At the same time, the dragged content 850 may be transmitted to a terminal for the fingerprint registered user.

Similarly, the fingerprint registered user may apply an input for dragging one of contents contained in the second screen 840 to the first screen 830. Accordingly, the dragged content may be also displayed on the first screen 830, and the dragged content may be transmitted to the main user's terminal. Further, it is possible to enter a fast image edit mode through the main user's fingerprint recognition. The fast image edit mode denotes a function capable of showing a result to which an image edit effect has been applied in a preview form.

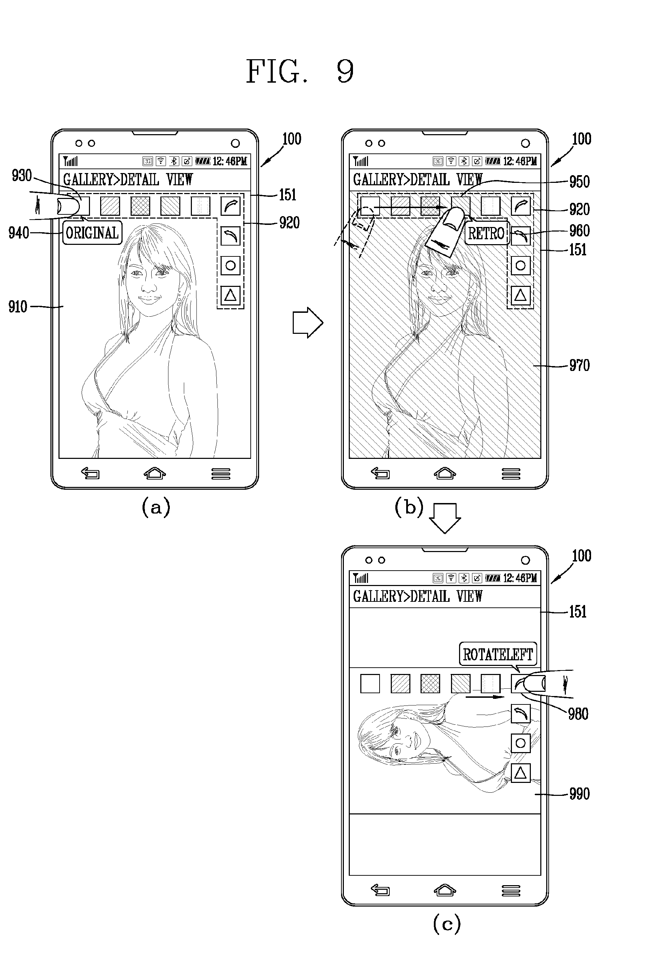

FIG. 9 is a conceptual view illustrating an embodiment for editing an image according to a fingerprint input. Referring to FIG. 9(a), when a main user makes a long touch to a left edge portion of the photo 910 displayed on the photo album (gallery), the main user's fingerprint are entered. Accordingly, the terminal enters a fast image edit mode to display various edit icons 920 along the edge of the photo 910.

When an edit effect is not yet applied to the left edge portion touched for the first time, an icon 930 indicating this can be displayed at a position to which the main user applies a long touch. Furthermore, a description content 940 of the icon 930 may be displayed.

Referring to FIG. 9(b), the main user touches edit icons 920 with a drag input. Accordingly, a preview image 970 showing a result in which an image effect corresponding to the touched icon 950 has been applied to the photo 910 is displayed. For example, when the main user touches a RETRO icon 950 with a drag input, a preview image 970 showing a result in which an image effect corresponding to the RETRO icon 950 has been applied to the photo 910 is displayed. At this time, the description content 960 of the RETRO icon 950 may be displayed at the same time.

If the main user releases his or her finger in touch with the RETRO icon 950 without continuously applying a drag input thereto, the controller 180 performs an edit in which the image effect corresponding to the RETRO icon 950 is applied to the photo 910.

Referring to FIG. 9(c), the main user in FIG. 9(b) may continuously apply a drag input without releasing his or her finger. Accordingly, when the main user touches a ROTATE LEFT icon 980, a preview image 990 showing a result in which an image effect corresponding to the ROTATE LEFT icon 980 has been applied to the photo 910 is displayed. At this time, the description content of the ROTATE LEFT icon 980 may be displayed at the same time.

If the main user releases his or her finger in touch with the ROTATE LEFT icon 980 without continuously applying a drag input, the controller 180 performs an edit operation in which the photo 910 is rotated to the left by 90 degrees. Further, the terminal displays fingerprints stored therein to store a new fingerprint or change the stored fingerprint. Also, when a fingerprint is frequently recognized during the fingerprint input, a user interface for storage may be displayed.

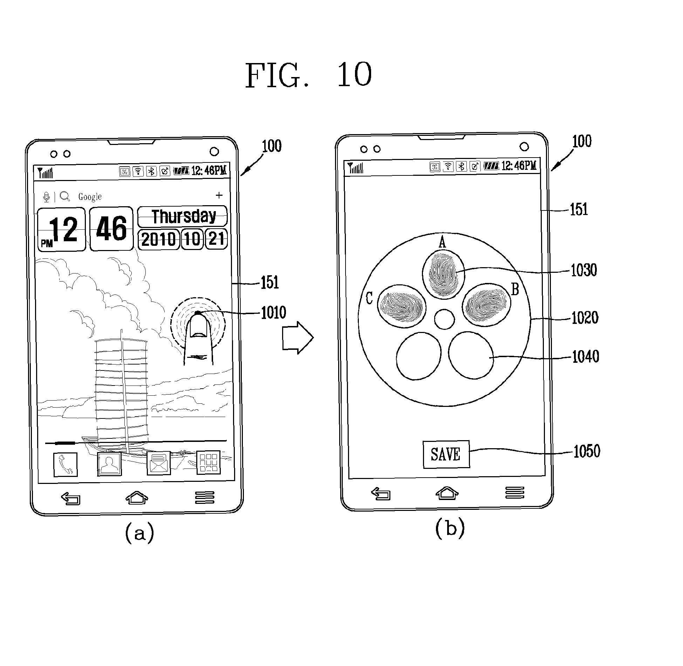

Next, FIG. 10 is a conceptual view illustrating an embodiment for registering a fingerprint with a terminal. Referring to FIG. 10, when a user makes a long touch with his or her finger or rubs his or her finger in the upward and downward direction or in the left and right direction on a lock screen, a fingerprint palette 1020 may be displayed. The fingerprint palette 1020 is one of the embodiments for collecting and displaying fingerprints stored therein.

At this time, the previously set fingerprint may be changed to an entered fingerprint 1010. For example, the user may select the fingerprint 1030 of user "A", and then makes a touch to the save icon 1050. Accordingly, the entered fingerprint 1010 may be stored as a new fingerprint for user "A".

Otherwise, the entered fingerprint 1010 may be stored as a fingerprint for a new user. For example, the user may select a space field 1040 in which his or her fingerprint can be stored, and then makes a touch to the save icon 1050. Accordingly, the entered fingerprint 1010 may be stored as a fingerprint for a new user. At this time, prior to touching the save icon 1050, it is possible to enter a new user's name, phone number or the like for the entered fingerprint 1010.

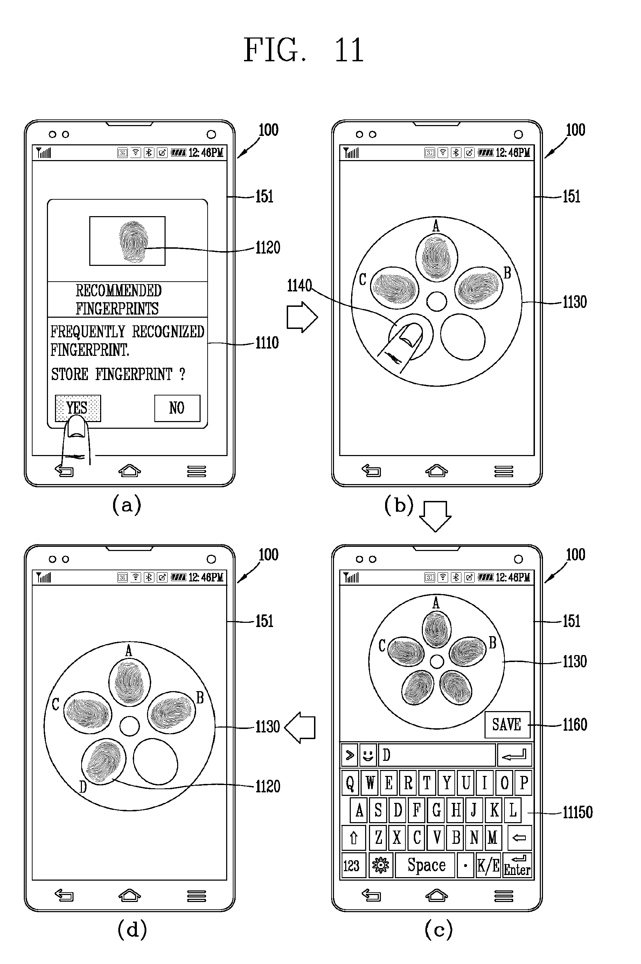

FIG. 11 is a conceptual view illustrating an embodiment for recommending a fingerprint store operation. Referring to FIG. 11 (a), when an unregistered fingerprint is entered more than a previously set number of times, a popup window 1110 recommending fingerprint registration may be displayed along with a frequently entered fingerprint 1120.

Referring to FIG. 11 (b), a fingerprint palette 1130 containing fingerprints stored therein may be displayed. At this time, the user may apply a long touch input to a fingerprint input field 1140 capable of entering a new fingerprint to enter a fingerprint 1120. Referring to FIG. 11(c), a keypad 1150 capable of entering the name of the user (owner of the fingerprint) for the fingerprint 1120 may be displayed according to the input of the fingerprint 1120, and the name of the user are entered and then stored by touching the save icon 1160. For example, "D" is entered as the name of the user for the fingerprint 1120 and then stored by touching the save icon 1160.

Referring to FIG. 11(d), the fingerprint 1120 of user "D" is newly registered on the fingerprint palette 1130. Further, it is possible to set up the scope of an application that can be executed for each fingerprint registered user.

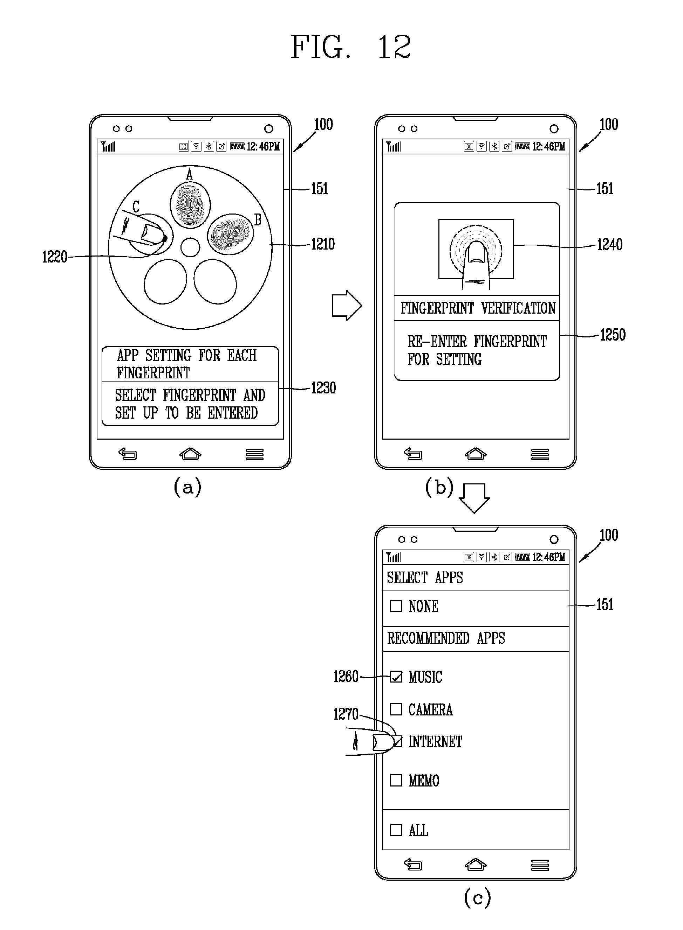

FIG. 12 is a conceptual view illustrating an embodiment for setting up an executable application for each fingerprint registered user. Referring to FIG. 12(a), when one 1220 of fingerprints displayed on the fingerprint palette 1210 is selected, a message window 1230 capable of selecting an application that can be approached (or executed) for each fingerprint may be displayed.

Referring to FIG. 12(b), a fingerprint input field 1240 and a message window 1250 for asking to enter his or her fingerprint again for fingerprint check may be displayed. Accordingly, the user may touch the fingerprint input field 1240 to enter his or her fingerprint again. Referring to FIG. 12(c), when the terminal 100 is used with the selected fingerprint 1220, a user interface capable of selecting an approachable application.

Furthermore, during the selection of an application, a check indicator may be displayed on a check box corresponding to the application. For example, when NONE is selected, the user of fingerprint "C" 1220 cannot execute any application. In another example, when ALL is selected, the user of fingerprint "C" 1220 can execute all applications. In still another example, when applications MUSIC and INTERNET are selected, the user of fingerprint "C" 1220 can execute only applications MUSIC and INTERNET.

Further, when the controller 180 determines that a non-fingerprint-registered user's fingerprint with which his or her fingerprint is not registered has been entered other than the main user in a camera capture mode, only the camera capture mode may be executed. When the controller 180 determines that the fingerprint registered user's fingerprint has been entered in a camera capture mode, at least one of content captured by the fingerprint registered user and content displayed with the fingerprint registered user may be displayed. It is also possible to transmit at least one of content captured by the fingerprint registered user and content displayed with the fingerprint registered user to a terminal for the fingerprint registered user.

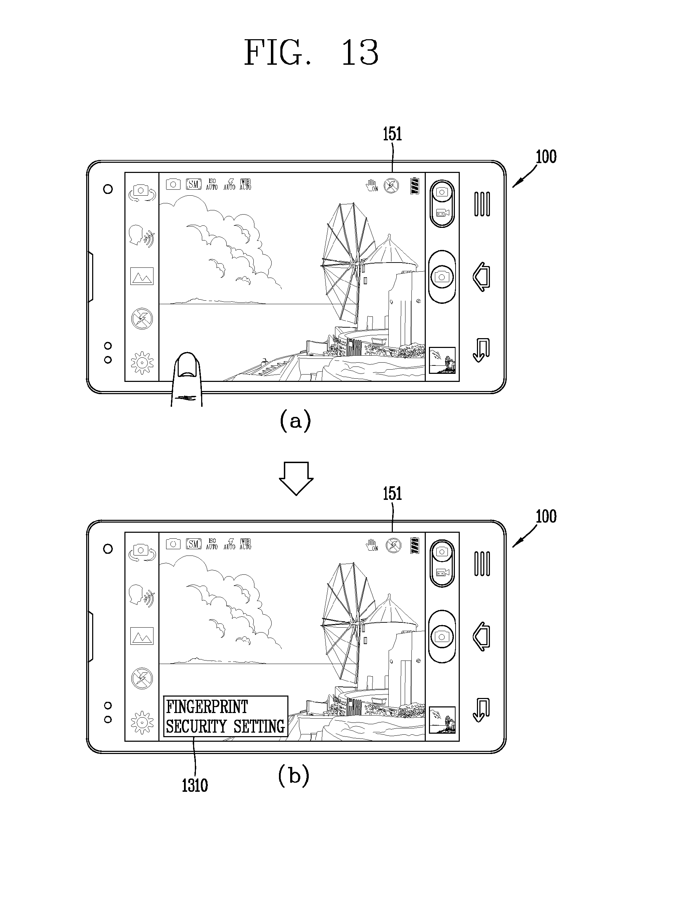

Next, FIG. 13 is a conceptual view illustrating an embodiment of a user interface displayed for a non-fingerprint-registered user in a camera capture mode. Referring to FIG. 13, when the controller 180 determines that an unregistered fingerprint has been entered in a camera capture mode, a message 1310 indicating that fingerprint security has been set may be displayed. Accordingly, the user of the fingerprint (non-fingerprint-registered user) can perform only camera capture, but cannot execute other applications such as Internet, address book, memo and the like.

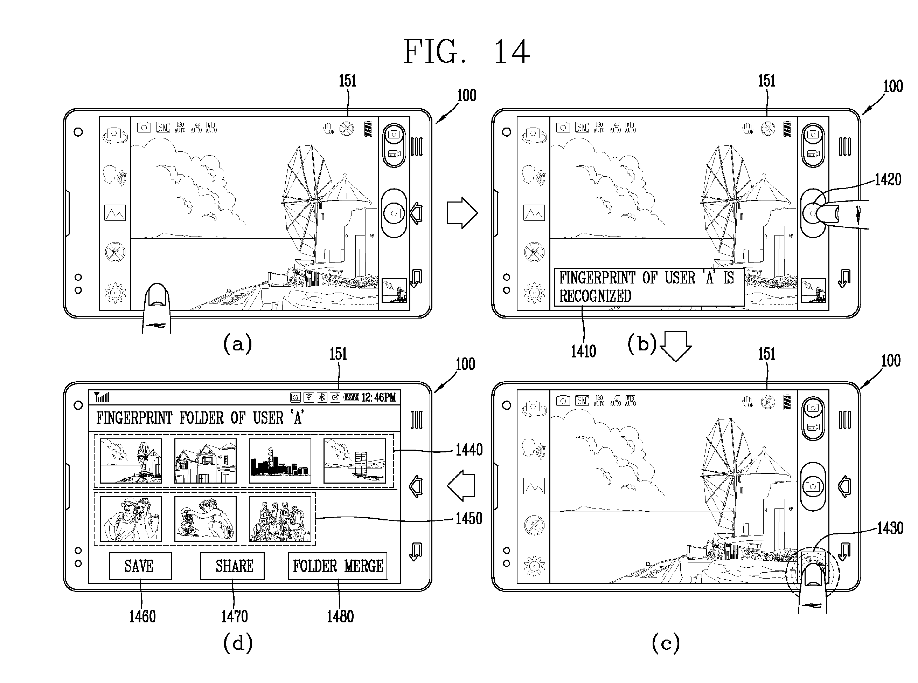

FIG. 14 is a conceptual view illustrating an embodiment of a user interface displayed for a fingerprint registered user in a camera capture mode. Referring to FIGS. 14(a) and 14(b), when the controller 180 determines that the fingerprint of a fingerprint registered user "A" has been entered in a camera capture mode, a message 1410 indicating that the fingerprint of user "A" has been recognized may be displayed. Subsequently, user "A" may touch the capture button 1420 to capture an image.

Referring to FIG. 14(c), during the camera capture, a preview icon 1430 capable of showing photos associated with the fingerprint of user "A" may be displayed. Referring to FIG. 14(d), when user "A" touches and selects the preview icon 1430 in FIG. 14(c), photos associated with the fingerprint of user "A" may be displayed. For example, photos 1440 captured by user "A" or photos 1450 shown with user "A" therein may be displayed.

Accordingly, user "A" may touch the save button 1460 to store the previously captured photo in the relevant folder, namely, a folder (fingerprint folder of user "A") in which photos associated with the fingerprint of user "A" are stored. Otherwise, the user may touch a folder integrate icon 1480 to store it in another photo folder stored in the photo album of the terminal 100.

In another embodiment, the user may touch the share button 1470 to transmit a photo captured by the terminal of user "A" through a scheme such as a text message, an email, SNS, and the like. Further, only search records that have been searched by himself of herself may be shown to a main user, a fingerprint registered user or a non-fingerprint-registered user.

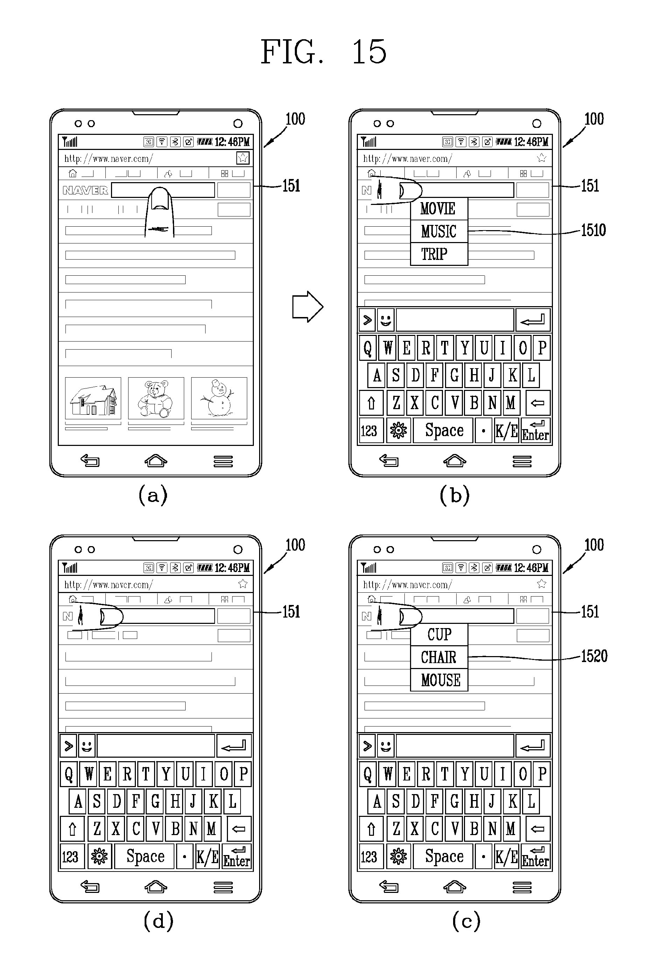

FIG. 15 is a conceptual view illustrating an embodiment for showing only search records that have been searched by himself or herself according to fingerprint recognition. Referring to FIG. 15(a), when the main user of the terminal 100 touches a search window for Internet search, the fingerprint of the main user may be recognized on the terminal 100.

Referring to FIG. 15(b), when the fingerprint of the main user is recognized as illustrated in FIG. 15(a), the content 1510 that have been previously searched by the main user may be displayed. Referring to FIG. 15(c), when a fingerprint registered user other than the main user touches a search window for Internet search, the fingerprint of the fingerprint registered user may be recognized on the terminal 100.

Accordingly, the content 1520 that have been previously searched by the fingerprint registered user on the terminal 100 may be displayed. In other words, the fingerprint registered user cannot check the content 1510 that have previously been searched by the main user. In another embodiment, the content 1520 that have been previously searched by the fingerprint registered user on the terminal of the fingerprint registered user may be displayed.

Referring to FIG. 15(d), when a non-fingerprint-registered user touches a search window for Internet search, the previously searched content is not displayed. In other words, the non-fingerprint-registered user cannot check the content 1510, 1520 that have been searched by the main user or fingerprint registered user. Further, a different message may be displayed on the display unit 151 according to whether or not the main user's fingerprint has been entered to the terminal and whether or not a fingerprint of a user other than the main user has been entered to a terminal for the user other than the main user while making or receiving a call for the user other than the main user.

Specifically, a message displayed on the screen of the calling terminal may be determined according to whether the fingerprint of the caller or recipient is stored in the calling terminal, and a message displayed on the screen of the receiving terminal may be determined according to whether the fingerprint of the caller or recipient is stored in the receiving terminal.

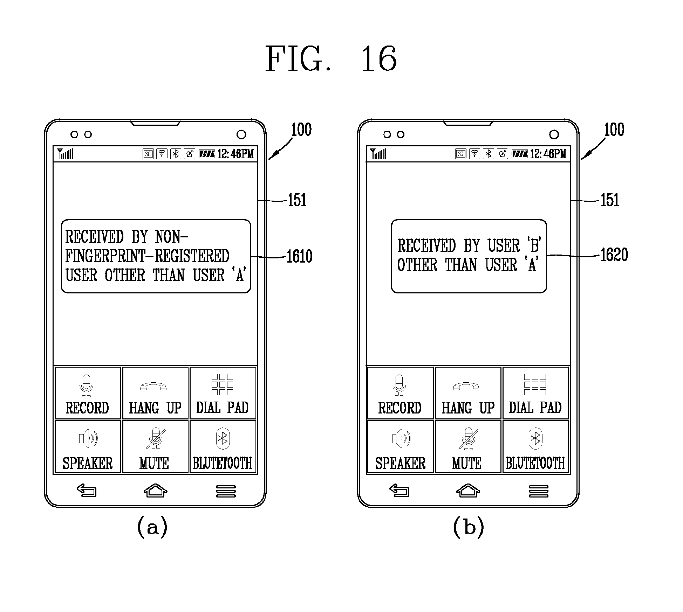

FIG. 16 is a conceptual view illustrating an embodiment in which a message is shown on a calling or receiving terminal when a main user of the receiving terminal does not receive the receiving terminal. Referring to FIG. 16(a), when a call is made to the terminal of user "A" with the terminal 100 of the main user, a fingerprint entered to the terminal of user "A" while touching a receive button may not be the fingerprint of user "A" as well as may not be a fingerprint registered with the terminal 100 of the main user. Accordingly, a message 1610 indicating that a call has been received by a non-fingerprint-registered user other than user "A" along with a vibration feedback effect may be displayed on the terminal 100.

Referring to FIG. 16(b), when a call is made to the terminal of user "A" with the terminal 100 of the main user, a fingerprint entered to the terminal of user "A" while touching a receive button may be the fingerprint of user "B" registered with the terminal 100 of the main user but may not be the fingerprint of user "A". Accordingly, a message 1620 indicating that a call has been received by the fingerprint registered user "B" other than user "A" along with a vibration feedback effect may be displayed on the terminal 100. Furthermore, the terminal numbers of the users "A" and "B" may be displayed at the same time.

Further, when the terminal of user "A" is received by another user other than user "A", messages 1610, 1620 as illustrated in FIG. 16 may be also displayed on the received terminal of user "A". However, contrary to the forgoing description, the displayed message may be determined according to whether or not the recipient's fingerprint is registered on the received terminal of user "A".

Specifically, when the terminal 100 of user "A" is received by a user other than user "A" whose fingerprint is not registered with the terminal of user "A", a message 1610 as illustrated in FIG. 16(a) may be displayed. Furthermore, when the terminal 100 of user "A" is received by user "B" other than user "A" whose fingerprint is registered with the terminal of user "A", a message 1620 as illustrated in FIG. 16(b) may be displayed. In other words, a message displayed on the screen of the calling terminal is determined according to whether or not a recipient's fingerprint is stored in the calling terminal, and a message displayed on the screen of the receiving terminal is determined according to whether or not a recipient's fingerprint is stored in the receiving terminal.

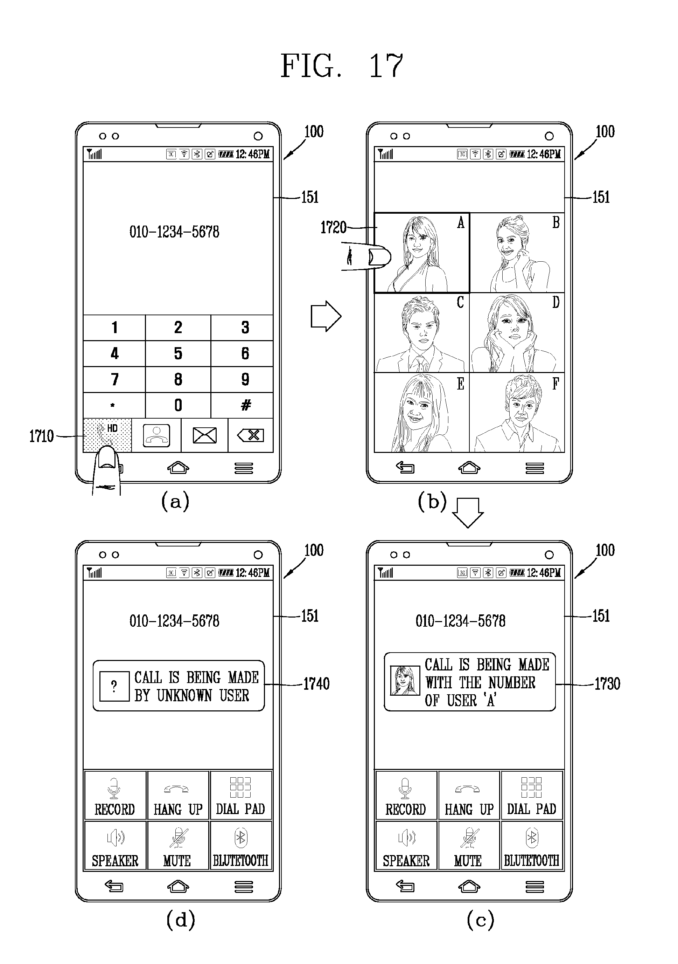

FIG. 17 is a conceptual view illustrating an embodiment in which a message is shown on a calling terminal when a main user of the calling terminal does not call the calling terminal. Referring to FIGS. 17(a) and 17(b), when a fingerprint entered while touching a phone calling button 1710 of the main user terminal 100 is a fingerprint of the fingerprint registered user "A" registered with the terminal 100 other than the main user, namely, when user "A" makes a call to the terminal 100 of the main user, the photos, names or the like of the fingerprint registered users may be displayed. Accordingly, user "A" can select his or her own photo 1720 from the displayed list.

Referring to FIG. 17(c), a message 1730 indicating that a call is made to the terminal 100 of the main user, namely, the terminal 100 that is making a call, with the number of user "A" may be displayed. Referring to FIG. 17(d), when a fingerprint entered while touching a phone calling button 1710 of the main user terminal 100 is a fingerprint of the non-fingerprint-registered user that is not registered with the terminal 100, a message 1740 indicating that an unknown user is making a call to the terminal 100 that is making a call may be displayed. In another embodiment, a vibration or sound effect may be output on the terminal 100 that is making a call along with the message 1730, 1740.

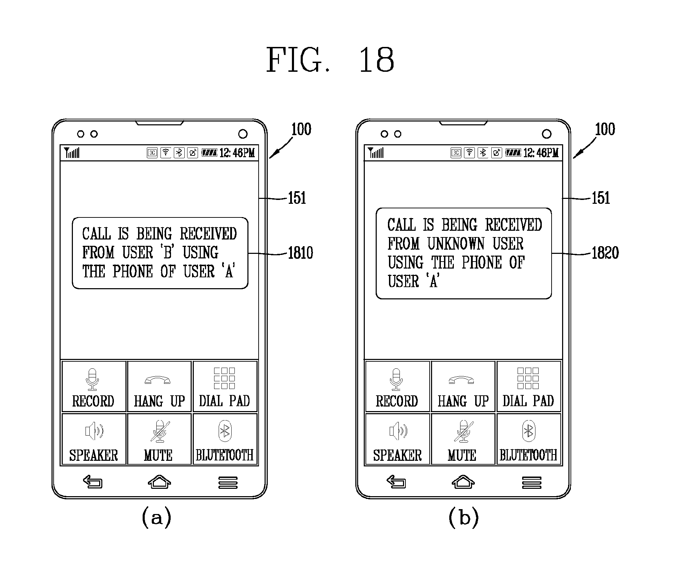

FIG. 18 is a conceptual view illustrating an embodiment in which a message is shown on a receiving terminal when a main user of the calling terminal does not call the calling terminal. Referring to FIG. 18(a), when a user touching a call button on the terminal of user "A" is user "B" whose fingerprint is registered with the terminal 100 that is receiving a call, namely, when user "B" makes a call with the terminal of user "A", a message 1810 indicating that a call is being received from user "B" using the terminal of user "A" on the terminal 100 of the recipient. At this time, the number of the terminal of user "A" or "B" may be displayed at the same time.

Referring to FIG. 18(b), when a user touching a call button on the terminal of user "A" is a non-fingerprint-registered user whose fingerprint is not registered with the terminal 100 that is receiving a call, namely when a non-fingerprint-registered user whose fingerprint is not registered with the terminal 100 that is receiving a call makes a call to the terminal of user "A", a message 1820 indicating that a call is being received from an unknown user using the terminal of user "A" may be displayed on the terminal 100 of user "A".

In another embodiment, user "C" may send a text message or SNS message from the terminal of user "A" to the terminal of user "B". At this time, when the fingerprint of user "C" is registered with the terminal of user "B", a message indicating that the message is a message written and transmitted by user "C" with the terminal of user "A" may be displayed along with the message written by user "C".

If the fingerprint of user "C" is not registered with the terminal of user "B", then a message indicating that the message is a message written and transmitted by an unknown user with the terminal of user "A" may be displayed along with the message written by user "C". Further, a fingerprint for a person stored in the address book may be registered with the terminal.

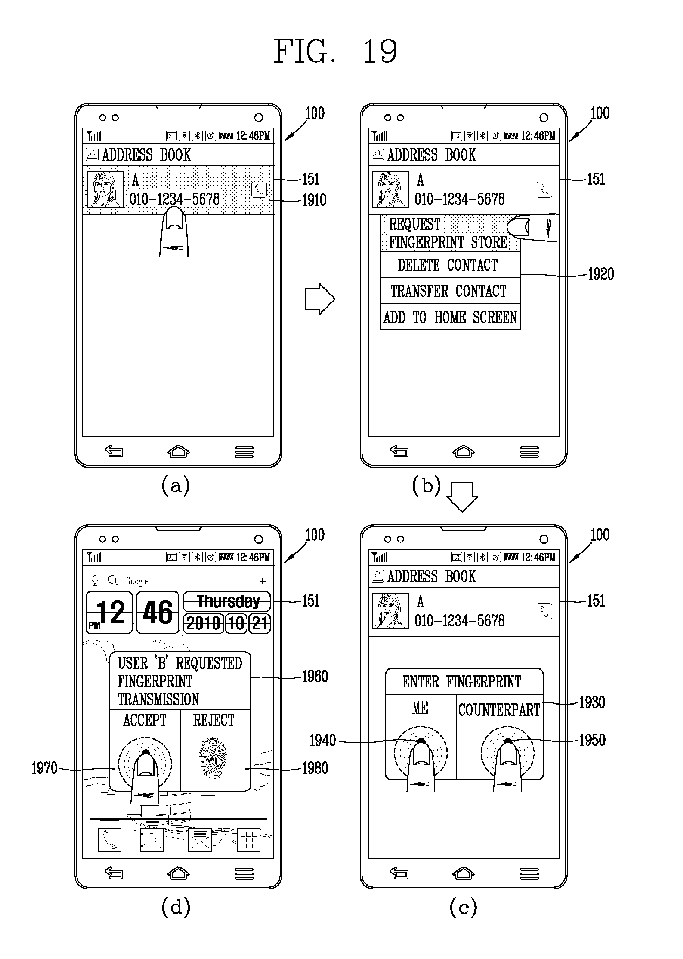

FIG. 19 is a conceptual view illustrating another embodiment for registering a fingerprint with a terminal. Referring to FIG. 19(a), it is possible to make a long touch to select the contact number 1910 of user "A" desired to perform fingerprint registration on the address book.

Referring to FIG. 19(b), a list 1920 capable of requesting a fingerprint store operation may be displayed in a popup form according to the long touch input in FIG. 19(a), thereby touching and selecting the list 1920. Referring to FIG. 19(c), a popup window 1930 for fingerprint input may be displayed. Accordingly, the main user of the terminal 100 touches his or her own fingerprint input field 1940 to enter his or her fingerprint, and user "A" desired to register his or her fingerprint with the terminal 100 may touch the counterpart fingerprint input field 1950 to enter his or her fingerprint. At this time, the main user and user "A" may concurrently or sequentially enter their fingerprints, respectively.

Referring to FIG. 19(d), when the fingerprint of user "A" is not entered in FIG. 19(c), it is possible to request a fingerprint input to the terminal of user "A". Specifically, a popup window 1960 indicating that user "B" (main user) has requested fingerprint transmission may be displayed on the terminal of user "A". Accordingly, user "A" may touch a fingerprint input field 1970 for accepting fingerprint transmission to enter his or her fingerprint, and the fingerprint of user "A" is transmitted from the terminal of user "A" to the terminal 100 of the main user (B).

Furthermore, when fingerprint transmission is undesired, user "A" may touch and select a fingerprint input field 1980 for rejecting fingerprint transmission. Accordingly, the fingerprint of user "A" is not transmitted to the terminal 100 of the main user (B), and a message indicating that user "A" has rejected fingerprint transmission may be transmitted to the terminal 100 of the main user (B).

Further, when the fingerprint of the fingerprint registered user is transmitted from a terminal for the fingerprint registered user, security data may be transmitted to the terminal for the fingerprint registered user. The security data may be defined as data that can be read during the fingerprint input.

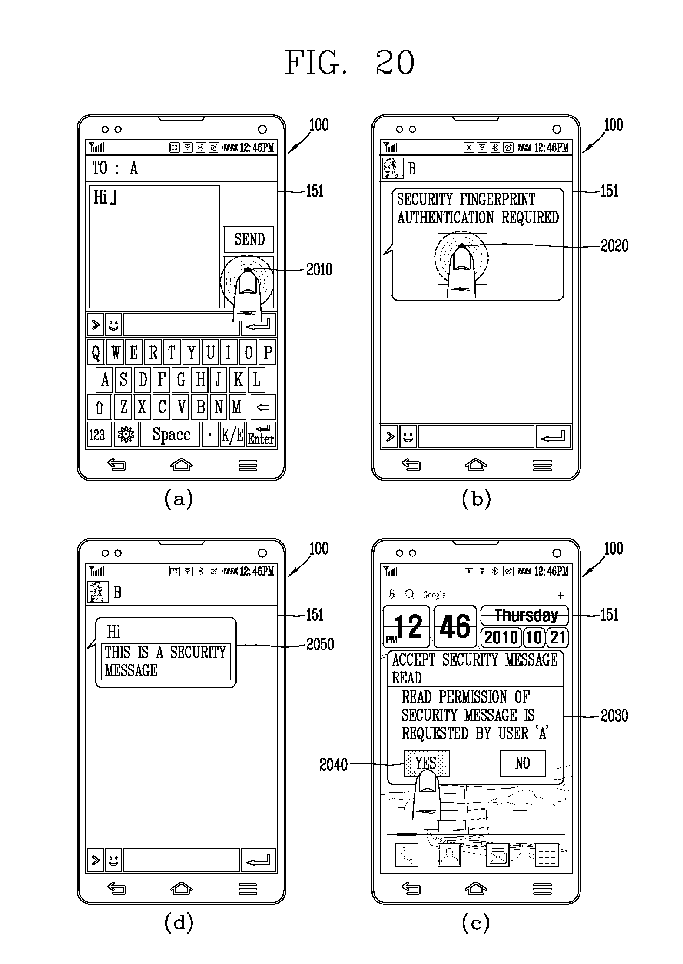

FIG. 20 is a conceptual view illustrating an embodiment of security data transmission. Referring to FIG. 20(a), in order to transmit a security message from the terminal of user "B" to the terminal of user "A", user "B" may prepare a message that is to be transmitted to user "A" and then touch a fingerprint input field 2010 to enter his or her fingerprint.

Referring to FIG. 20(b), the security message transmitted by user "B" is not immediately seen on the terminal of user "A". Furthermore, user "A" may touch a fingerprint input field 2020 for security authentication to enter his or her fingerprint. Referring to FIG. 20(c), as user "A" enters his or her fingerprint as illustrated in FIG. 20(b), a message window 2030 indicating that user "A" has requested a read permission of the security message may be displayed on the terminal of user "B". Subsequently, the fingerprint of user "B" is entered again while at the same time user "B" touches a button 2040 for authorizing the permission.

Referring to FIG. 20(d), as the read permission of user "B" is authorized as illustrated in FIG. 20(c), the content 2050 of the security message transmitted by user "B" may be displayed on the terminal of user "A". In other words, for the security reading of security data, the fingerprints of the caller and recipient should be entered. Further, when the fingerprint of the fingerprint registered user is transmitted from a terminal for the fingerprint registered user, it is possible to perform online payment.

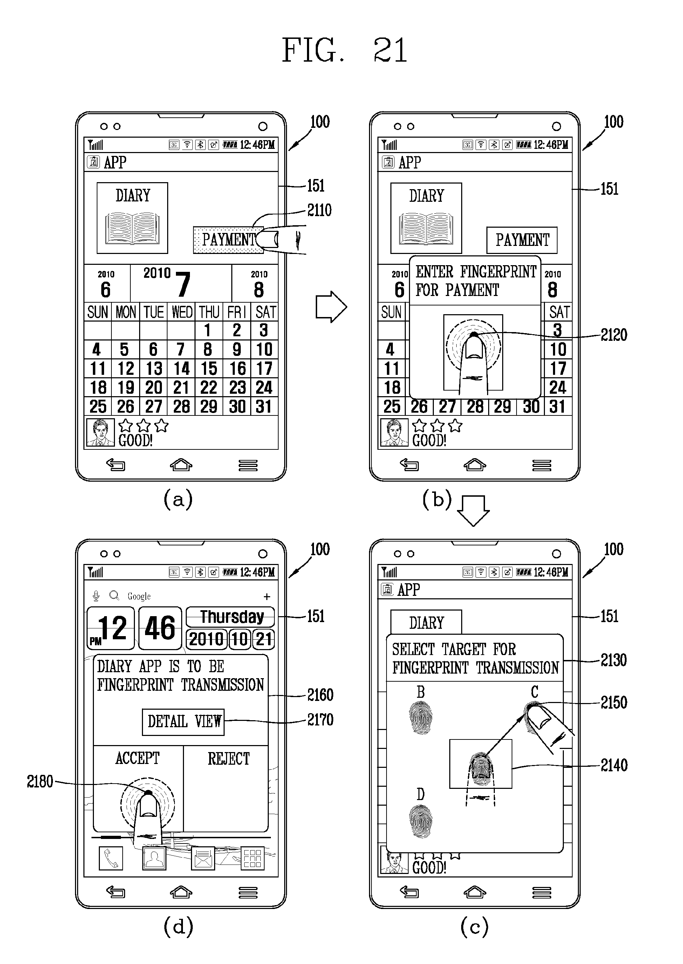

Next, FIG. 21 is a conceptual view illustrating an embodiment for receiving fingerprint transmission to execute online payment. Referring to FIG. 21(a), user "A" may touch a payment button 2110 of a paid application on the terminal of user "A" to make a payment. Referring to FIG. 21(b), as the payment button 2110 is touched as illustrated in FIG. 21A, a fingerprint input field 2120 for payment authorization may be displayed. User "A" may touch the fingerprint input field 2120 to enter his or her fingerprint.

Referring to FIG. 21 (c), the fingerprint of user "A" is entered as illustrated in FIG. 21 (b), and then a message window 2130 instructing to select a target to which fingerprint transmission is requested for payment authorization may be displayed. Accordingly, user "A" may touch a fingerprint input field 2140 for entering his or her own fingerprint again, and select a target to which fingerprint transmission is requested with a drag input. Specifically, it is possible to apply a drag input to the side 2150 at which the fingerprint of user "C" is shown to select user "C".

Referring to FIG. 21 (d), a message window 2160 requesting the purchase authorization of user "A" may be displayed on the terminal of user "C" who has requested fingerprint transmission in FIG. 21 (c). Accordingly, when user "C" touches a detail view icon 2170, an application desired to be purchased by user "A", a price on the application, a rating on the application, and the like may be displayed.

Furthermore, user "C" may touch a fingerprint input field 2180 for authorizing the purchase of user "A" to enter his or her fingerprint. As a result, the fingerprint of user "C" is transmitted to the terminal of user "A" and payment for the relevant application is performed on the terminal of user "A" to which the fingerprint of user "C" has been transmitted. Otherwise, user "C" may touch a fingerprint input field 2190 for refusing the purchase of user "A" to enter his or her fingerprint, thereby refusing the payment of user "A".

In other words, the payment may be performed only when receiving both the fingerprints of the purchaser and purchase approver. Further, the caller of an overseas call may be verified according to a fingerprint input.

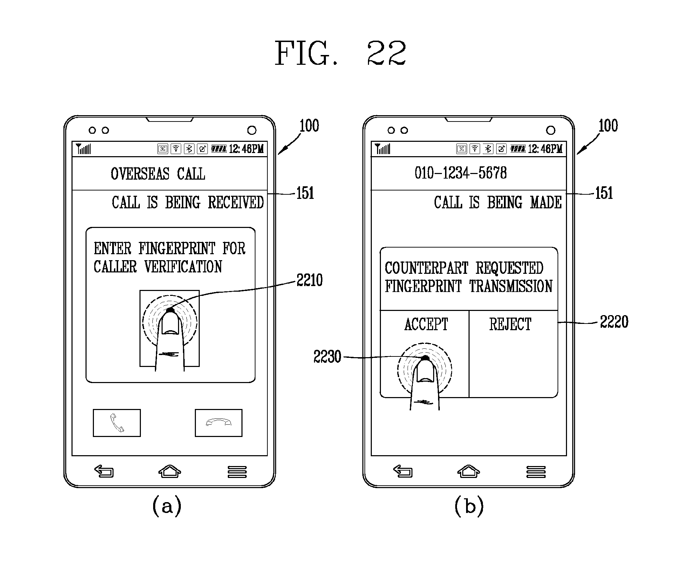

FIG. 22 is a conceptual view illustrating an embodiment for verifying the caller of an overseas call according to a fingerprint input. Referring to FIG. 22(a), when caller verification is required while receiving an overseas call, the recipient may enter his or her fingerprint to a fingerprint input field 2210 for requesting caller verification to request caller check.

Referring to FIG. 22(b), a message window 2220 indicating that the recipient has requested fingerprint transmission may be displayed on the terminal that is making an overseas call. Accordingly, the caller may enter his or her fingerprint to a fingerprint input field 2230 for approving fingerprint transmission to approve fingerprint transmission.

As a result, when the received fingerprint of the caller is stored in the terminal of the recipient, a message indicating that an overseas call is being received from the relevant caller may be displayed. Further, it is possible to request fingerprint transmission to a terminal for the fingerprint registered user while communicating with the terminal for the fingerprint registered user.

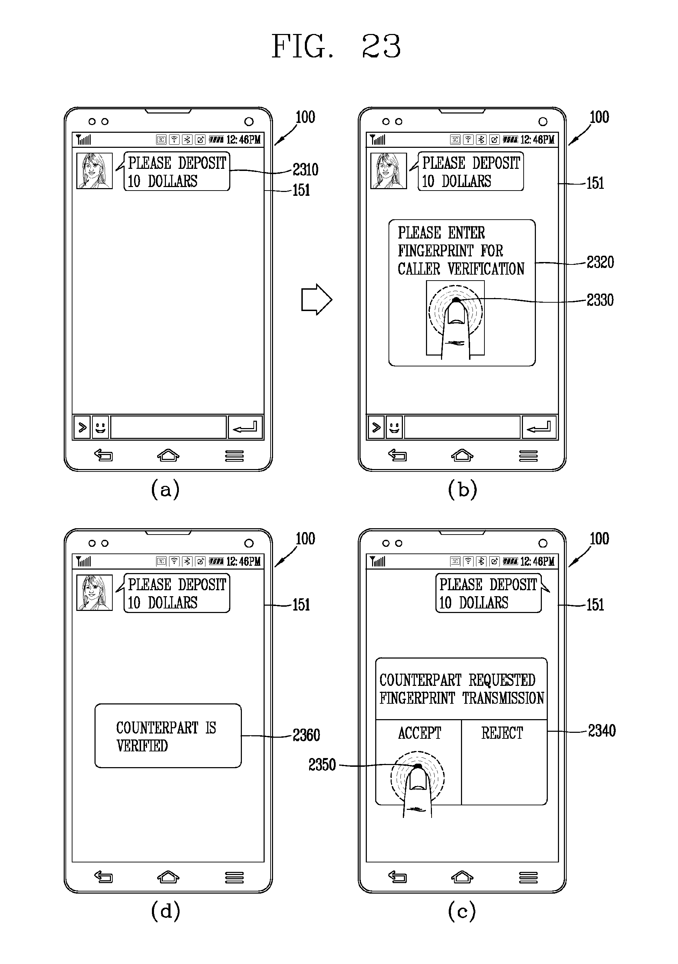

FIG. 23 is a conceptual view illustrating an embodiment for making a request for fingerprint transmission to verify the caller. Referring to FIGS. 23(a) and 23(b), when user "B" touches a message 2310 received from user "A", a message window 2320 instructing to enter a fingerprint may be displayed to verify the caller "A". Accordingly, user "B" may touch a fingerprint input field 2330 to enter his or her fingerprint.

Referring to FIG. 23(c), a message window 2340 indicating that the counterpart "B" has requested fingerprint transmission may be displayed on the terminal of user "A". Accordingly, user "A" may touch a fingerprint input field 2350 for approving fingerprint transmission to enter his or her fingerprint.

Referring to FIG. 23(d), a message window 2360 indicating that user "A" is authorized as himself or herself may be displayed on the terminal of user "B". Through this, it is possible to prevent a damage from being caused by financial fraud. Further, when a third person posts matters associated with personal information on the Internet or the like, it is possible to enter a fingerprint to approve this.

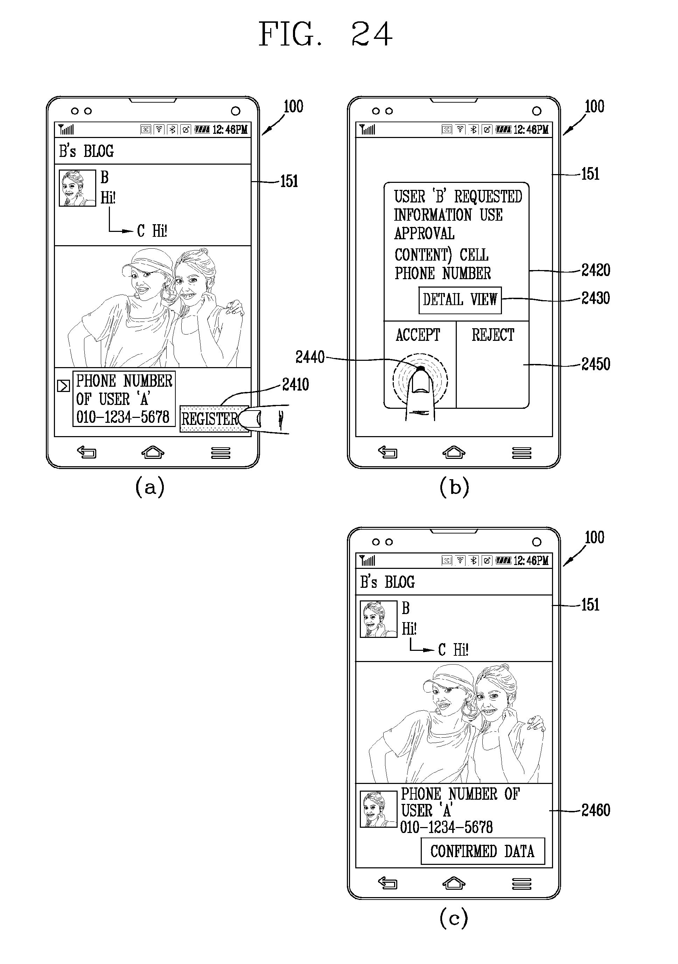

FIG. 24 is a conceptual view illustrating an embodiment for approving a case where a third person posts personal information. Referring to FIG. 24(a), user "B" may post personal information on user "A" only when obtaining the approval of user "A". Specifically, when user "B" touches a register button 2410 for posting the cell phone number of user "A" on his or her own blog, the fingerprint of user "B" are entered. The personal information of user "A" may include the home phone number, cell phone number, home or office address, birthday, resident registration number, family relation, and the like of user "A".

Referring to FIG. 24(b), a message window 2420 indicating that user "B" has requested information use approval may be displayed on the terminal of user "A". Furthermore, the content (cell phone number) that is to be posted by user "B" may be briefly displayed, and user "A" may touch a detail view button 2430 to check the detailed description to be posted by user "B".

In another embodiment, a message window 2420 may be displayed with a different color according to the level of security required for the content to be posted by user "B". For example, a red message window 2420 may be displayed when information such as his or her resident registration number requiring a high security level is posted, and a yellow message window 2420 may be displayed when information such as his or her family relation requiring a low security level is posted.

Subsequently, user "A" may touch a fingerprint input field 2440 for information use approval to enter his or her fingerprint. Furthermore, when user "A" approves the information use, a statement of the approval may be stored in the database of the terminal of user "A". Accordingly, when user "A" selects the stored statement, authorization such as edit or the like may be acknowledged to user "A" to edit the content posted by user "B". For example, user "A" may modify or delete a portion in which his or her own personal information is posted on the blog of user "B".

Further, user "A" may touch a fingerprint input field 2450 for information use refusal to refuse the use of his or her own personal information. Accordingly, a message window for asking whether or not to obtain reapproval may be subsequently displayed.

Referring to FIG. 24(c), according to the approval of user "A" in FIG. 24B, user "B" may post the cell phone number 2460 of user "A". In another embodiment, when the information of user "A" posted by user "B" is forwarded or shared by a third person, it is possible to request whether or not approve this to user "A" again. Accordingly, when refused by user "A", the third person is unable to forward or read the relevant posting.

According to embodiments of the present invention, it is possible to receive a fingerprint registered user's fingerprint to execute the account of the fingerprint registered user, and transmit content to the terminal of the fingerprint registered user. Furthermore, a photo album of the terminal and a photo album of the fingerprint registered user terminal may be concurrently displayed to transmit content such as a photo or the like, and only a photo captured by the fingerprint registered user or captured with the fingerprint registered user may be managed and displayed with a separate folder.

In addition, a fingerprint entered while receiving or making a call may be recognized to determine the actual recipient or caller of the receiving or calling terminal, and display the resultant result on the receiving or calling terminal. Furthermore, it is possible to request the fingerprint transmission of a third person during a charge settlement. For example, a protector may manage an indiscreet act of payment of a protected person.

Further, it is possible check whether or not a message is sent by himself or herself through a fingerprint input, thereby preventing a damage due to financial fraud. As a result, it is possible to enhance the user's convenience.

According to an embodiment of present invention, the foregoing method may be implemented as codes readable by a processor on a medium written by a program. Examples of the processor-readable media may include ROM, RAM, CD-ROM, magnetic tape, floppy disk, and optical data storage device, and the like, and also include a device implemented in the form of a carrier wave (for example, transmission via the Internet).

The configurations and methods according to the above-described embodiments will not be applicable in a limited way to the foregoing mobile terminal, and all or part of each embodiment may be selectively combined and configured to make various modifications thereto.

## Claims

1. A mobile terminal (100), comprising:
a wireless communication unit (110) configured to provide wireless communication;
a display unit (151); and
a controller (180) configured to:
receive a fingerprint input on the display unit (151) matching at least one of a first user's fingerprint and a second user's fingerprint, said first user being a main user of the mobile terminal (100) and being different than the second user, and
control at least one of the mobile terminal (100) of the first user and a terminal of the second user based on the received fingerprint input.

2. The mobile terminal of claim 1, wherein the controller (100) is further configured to:
display an image on the display unit (151),
receive the second user's fingerprint on the displayed image, and
control the wireless communication unit (110) to transmit the displayed image to the terminal of the second user.

3. The mobile terminal (100) according to any one of the preceding claims, wherein the controller (180) is further configured to:
display a photo album on the display unit (151),
receive both the first user's fingerprint and the second user's fingerprint on the photo album, and
display content contained in the photo album of the mobile terminal (100) and content contained in a photo album of the terminal of the second user on divided first and second screens of the display unit (151).

4. The mobile terminal (100) of claim 3, wherein the controller (180) is further configured to:
receive a drag input from the first screen to the second screen,
display content from the first screen also on the second screen according to the received drag input, and
transmit the content from the first screen to the terminal of the second user.

5. The mobile terminal (100) according to any one of the preceding claims, wherein the controller (180) is further configured to:
determine that the fingerprint input is a non-fingerprint-registered user that does not match either the first user's fingerprint or the second user's fingerprint in a camera capture mode, and
restrict the non-fingerprint-register user to only being able to use the camera capture mode.

6. The mobile terminal (100) according to any one of the preceding claims, wherein the controller (180) is further configured to:
receive the second user's fingerprint on the display unit (151) in a camera capture mode, and
display on the display unit (151) at least one of content captured by the second user and content including an image of the second user.

7. The mobile terminal of claim 6, wherein the controller (180) is further configured to control the wireless communication unit (110) to transmit said at least one of the content captured by the second user and the content including the image of the second user to the terminal of the second user.

8. The mobile terminal (100) according to any one of the preceding claims, wherein the controller (180) is further configured to:
receive a call from another terminal,
determine that the fingerprint input is a non-fingerprint-registered user that does not match either the first user's fingerprint or the second user's fingerprint, and
display a message on the display unit (151) indicating the non-fingerprint-register user.

9. The mobile terminal (100) according to any one of the preceding claims, wherein the controller (180) is further configured to:
receive the second user's fingerprint and corresponding security data transmitted from the terminal of the second user.

10. The mobile terminal (100) according to any one of the preceding claims, wherein the controller (180) is further configured to:
receive the second user's fingerprint and corresponding payment data, and
authorize or reject online payment for a product to be purchased by the second user.

11. The mobile terminal (100) according to any one of the preceding claims, wherein the controller (180) is further configured to:
communicate with the terminal of the second user, and
request and store the second user's fingerprint from the terminal of the second user.

12. A method of controlling a mobile terminal, the method comprising:
receiving, via a controller of the mobile terminal, a fingerprint input on a display unit matching at least one of a first user's fingerprint and a second user's fingerprint, said first user being a main user of the mobile terminal and being different than the second user; and
controlling, via the controller, at least one of the mobile terminal of the first user and a terminal of the second user based on the received fingerprint input.

13. The method of claim 12, further comprising:
displaying an image on the display unit;
receiving the second user's fingerprint on the displayed image; and
controlling the wireless communication unit to transmit the displayed image to the terminal of the second user.

14. The method of any one of claims 12 and 13, further comprising:
displaying a photo album on the display unit;
receiving both the first user's fingerprint and the second user's fingerprint on the photo album; and
displaying content contained in the photo album of the mobile terminal and content contained in a photo album of the terminal of the second user on divided first and second screens of the display unit.

15. The method of claim 14, further comprising:
receiving a drag input from the first screen to the second screen;
displaying content from the first screen also on the second screen according to the received drag input; and
transmitting the content from the first screen to the terminal of the second user.
